(19) Europäisches Patentamt
European Patent Office
Office européen des brevets

(11) **EP 3 228 673 B1**

(12) **EUROPÄISCHE PATENTSCHRIFT**

(45) Veröffentlichungstag und Bekanntmachung des Hinweises auf die Patenterteilung:
**02.04.2025   Patentblatt 2025/14**

(21) Anmeldenummer: **17158029.3**

(22) Anmeldetag: **27.02.2017**

(51) Internationale Patentklassifikation (IPC):
*C09J 7/38* $^{(2018.01)}$        *C09J 133/08* $^{(2006.01)}$
*C09J 7/26* $^{(2018.01)}$        *C09J 7/22* $^{(2018.01)}$
*C09J 7/24* $^{(2018.01)}$

(52) Gemeinsame Patentklassifikation (CPC):
**C09J 7/385; C09J 7/22; C09J 7/24; C09J 7/26;
C09J 7/38; C09J 133/08;** C09J 2433/00;
C09J 2433/006

(54) **HAFTKLEBMASSE**

ADHESIVE MASS

SUBSTANCE ADHÉSIVE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.04.2016  DE 102016205808**

(43) Veröffentlichungstag der Anmeldung:
**11.10.2017   Patentblatt 2017/41**

(73) Patentinhaber: **tesa SE
22848 Norderstedt (DE)**

(72) Erfinder:
• **Aleed, Sarah
20251 Hamburg (DE)**
• **Befuß, Julia
22850 Norderstedt (DE)**
• **Prenzel, Alexander
22529 Hamburg (DE)**
• **Schubert, Thomas
22769 Hamburg (DE)**

(74) Vertreter: **tesa SE
Hugo-Kirchberg-Straße 1
22848 Norderstedt (DE)**

(56) Entgegenhaltungen:
EP-A1- 2 760 960          EP-A1- 3 178 856
EP-A2- 2 305 389          WO-A1-2013/048945
DE-U1- 202010 001 353

• ARKEMA: "NORSOCRYL 2EHA 2 ETHYLHEXYL ACRYLATE", 1 April 2015 (2015-04-01), internet, XP055721899, Retrieved from the Internet <URL:https://www.arkema.com/export/shared/. content/media/downloads/ products-documentations/acrylicmonomers/ data-sheet-norsocryl-2eha.pdf> [retrieved on 20200812]

**Beschreibung**

Die Erfindung betrifft das technische Gebiet der Haftklebmassen, wie sie in ein- und doppelseitig klebenden Klebebändern verwendet werden. Spezifischer betrifft die Erfindung eine Haftklebmasse auf Basis eines Poly(meth) acrylats, das auf einer bestimmten Monomerenzusammensetzung beruht.

Die Erfindung zielt unter anderem auf den klebtechnisch relevanten Parameter "Benetzung" ab. Darunter wird im Folgenden die Ausbildung einer Grenzfläche zwischen einer Haftklebmasse und dem zu verklebenden Substrat verstanden. Der Begriff "Benetzung" beschreibt somit das Vermögen einer Haftklebmasse, Unebenheiten auszugleichen und Luft zwischen sich und dem Substrat zu verdrängen. Je stärker die Benetzung ist, desto besser können sich die Wechselwirkungen zwischen Haftklebmasse und Substrat ausbilden und desto besser werden die Haftung und die Adhäsion. Häufig wird beobachtet, dass insbesondere auf rauen Oberflächen bzw. Oberflächen, die herstellungsbedingt Unebenheiten oder Krümmungen aufweisen oder gewellt sind, durch mechanische Belastungen eine einmal erreichte Benetzung wieder schwächer wird, also eine Entnetzung stattfindet.

Die Benetzung ist vom Klebkraftaufbau über die Zeit zu unterscheiden. Auch bei einer guten anfänglichen Benetzung kann die Klebkraft mit der Zeit noch ansteigen, da sich immer mehr im Klebstoff enthaltene funktionelle Gruppen, die mit der Oberfläche wechselwirken können, zu dieser hin orientieren.

Für diverse Anwendungsgebiete, wie beispielsweise im Bausektor, in der industriellen Fertigung von technischen Produkten oder für Montagezwecke, werden zunehmend dicke, aber stark klebende Klebebänder (so genannte "Montageklebebänder") benötigt. Da die Verklebungen häufig im Außenbereich stattfinden bzw. die verklebten Produkte den äußeren Witterungseinflüssen ausgesetzt sind, sind die Erwartungen an die Eigenschaften derartiger Klebebänder häufig hoch. So soll die Verklebung stark, dauerhaft und witterungsbeständig sein; gefordert wird vielfach eine hohe Feuchtigkeits-, Wärme- und Feuchtwärmebeständigkeit. Weiterhin sollen die Klebebänder schnell benetzen und dabei Unebenheiten in der Verklebungsfuge bzw. auf den zu verklebenden Untergründen ausgleichen und von Anfang an hohe Klebkräfte (Initialklebkräfte) aufweisen. Bei der Verwendung von ungeschäumten Klebebändern ergibt sich durch eine gute Benetzung zusätzlich der Vorteil, dass die Verklebung von transparenten Materialien ohne optische Defekte ermöglicht wird, was zunehmend auch für dicke Klebebänder gewünscht wird (etwa bei der Verklebung von transparenten Materialien wie Gläsern oder Transparenz-Kunststoffen).

Die Klebebänder, die für derartige Zwecke eingesetzt werden, sind für gewöhnlich mit Klebmassen ausgerüstet, bei denen die klebtechnischen Eigenschaften sehr gut aufeinander abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebmasse, die diese Eigenschaften beeinflussen, häufig gegenläufige Auswirkungen auf die einzelnen Eigenschaften haben, ist die Abstimmung in der Regel schwierig, oder es müssen Kompromisse im Ergebnis hingenommen werden.

Insbesondere für sehr dicke Klebebänder ist es zudem häufig schwierig, sehr homogene Klebebänder zu realisieren; verarbeitungsbedingt sind sehr dicke Klebebänder häufig durch die Schicht hindurch nicht homogen. Dies ist meistens unerwünscht, da häufig Klebebänder benötigt werden, die unabhängig von ihrer Schichtdicke und von der Herstellung wohldefinierte Eigenschaften aufweisen.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Stoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Aufließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

In geschäumten, mehrschichtigen Klebebändern kann es bei einer Dauerbelastung zu einer ungleichmäßigen Spannungsverteilung kommen, die sich, sofern die Kräfte größer als die Adhäsion der Haftklebemasseschicht zur Oberfläche sind, in einem partiellen Ablösen der Haftklebemasseschicht äußern. Der Anteil der benetzten Fläche wird somit geringer.

Um ein Abfließen (ein Herunterlaufen) der Haftklebmassen vom Substrat zu verhindern und eine genügende Stabilität der Haftklebmasse im Klebeverbund zu garantieren, ist also eine hinreichende Kohäsion der Haftklebmassen erforderlich. Für gute Adhäsionseigenschaften müssen die Haftklebmassen aber andererseits in der Lage sein, auf das Substrat aufzufließen, genügend Wechselwirkungen mit der Oberfläche in der Grenzschicht auszubilden und eine gute und dauerhafte Benetzung der Substratoberfläche zu garantieren. Um Brüche innerhalb der Verklebungsfuge (innerhalb der Haftklebmassenschicht) zu vermeiden, ist zudem eine gewisse Elastizität der Haftklebmasse erforderlich.

Um eine hinreichende Kohäsion der Haftklebmassen zu erreichen, werden diese in der Regel vernetzt, das heißt einzelne Makromoleküle werden durch Brückenbindungen miteinander verknüpft. Die Vernetzung kann auf unterschiedliche Weisen geschehen, es gibt beispielsweise physikalische und chemische (thermische) Vernetzungsmethoden.

Zur Herstellung homogener Klebebänder ist es von Vorteil, die Polymere thermisch zu vernetzen: Es ist ohne weiteres möglich, auch dicke Schichten gleichmäßig mit thermischer Energie zu versorgen. Masseschichten, die durch aktinische Strahlung (beispielsweise ultraviolette Strahlung, Elektronenstrahlen) vernetzt wurden, zeigen hingegen ein Vernetzungsprofil durch die vernetzte Schicht hindurch. Dieses Vernetzungsprofil resultiert daraus, dass die Strahlen nur eine begrenzte Eindringtiefe in die Schicht hinein besitzen, wobei die Intensität der Strahlung zudem mit der Eindringtiefe aufgrund von Absorptionsprozessen abnimmt. Daher sind die außenliegenden Bereiche einer strahlenchemisch vernetzten Masseschicht stärker vernetzt als die weiter innen liegenden Bereiche, wobei die Vernetzungsintensität insgesamt nach innen abnimmt. Insbesondere für dicke Schichten ist dieser Effekt sehr signifikant.

So beschreiben EP 2 305 389 A2 und EP 2 617 789 A1 thermisch vernetzte, geschäumte und ungeschäumte Montageklebebänder mit guten adhäsiven und kohäsiven Eigenschaften. Jedoch zeigen diese Klebebänder ein vergleichsweise schlechtes Benetzungsverhalten und zusätzlich auch Schwächen hinsichtlich der Verklebung auf unpolaren Untergründen, insbesondere auf Autolacken.

WO 2013/048 985 A2 und WO 2013/048 945 A1 beschreiben mehrschichtige Montageklebebänder, die insbesondere zur Verklebung auf unpolaren Oberflächen, insbesondere Autolacken, geeignet sind. Die Klebebänder der WO 2013/048 985 A2 sind dadurch gekennzeichnet, dass die äußere Haftklebmasseschicht (Meth)acrylsäureester mit 2-Alkylalkanolresten, welche 12 bis 32 Kohlenstoffatome aufweisen, und optional mit $C_{1-12}$-Alkanolresten umfasst. In der WO 2013/048 945 A1 umfasst die äußere Haftklebmasseschicht insbesondere Acrylsäureester mit einem primären Alkoholrest, der 14 bis 25 Kohlenstoffatome und einen iso-Index von mindestens 2 bis maximal 4 aufweist. Neben dem Nachteil, dass die dort beschriebenen Produkte mittels UV-Strahlung vernetzt sind, zeigt sich, dass die anfänglich gute Benetzung unter Belastung geringer wird, es also zu einer Entnetzung kommt.

WO 2014/081 623 A2 beschreibt ebenfalls UV-vernetzte mehrschichtige Montageklebebänder mit sehr guten Verklebungsfestigkeiten auf Autolacken. Dies wird durch die Verwendung von 2-Propylheptylacrylat (PHA) als Comonomer in der äußeren Haftklebemasseschicht erreicht, wobei als bevorzugte Comonomerzusammensetzungen Mischungen aus PHA und einem weiteren Comonomer mit ethylenisch ungesättigter Gruppe beschrieben werden. Bei letzterem handelt es sich insbesondere um (Meth)acrylate mit verzweigten, cyclischen oder aromatischen Alkoholkomponenten, beispielsweise mit Isobornylacrylat (IBOA), einem Acrylsäureester mit hoher Glasübergangstemperatur und einem bicyclischen Rest.

US 2011/0244230 A1 beschreibt ein Acrylat-basiertes Schaumklebeband, welches besonders anschmiegsam ist und sich gut eignet, um auf unebenen Substraten verklebt zu werden. Allerdings sind die beschriebenen Klebebänder mittels UV-Strahlung vernetzt, so dass der resultierende Vernetzungsgradient zu einem schlechteren Benetzungsverhalten führt.

Die EP 2 226 372 A1 beschreibt eine thermisch vernetzte Haftklebemasse, die ein Polyacrylat mit einer Acrylsäurekonzentration von 8 bis 15 Gew.-% umfasst und dadurch gekennzeichnet ist, dass das Verhältnis der linearen zu den verzweigten Acrylsäureestern im Bereich von 1 : 6 bis 10 : 1 Masseanteilen liegt. Jedoch zeigt die Masse eine zu langsame Benetzung und einen zu langsamen Anstieg der Klebkraft auf die jeweilige Maximalklebkraft auf den Substraten.

DE 20 2010 001 353 U1 hat einen Klebstoffartikel zum Gegenstand, der mit einem synthetischen Polymer als Bindemittel hergestellt und dadurch gekennzeichnet ist, dass das Polymer aus Propylheptylacrylat oder aus Propylheptylacrylat und damit copolymerisierten, weiteren Monomeren aufgebaut ist.

EP 3 178 856 A1 beschreibt eine aus der Schmelze zu verarbeitende, thermisch vernetzbare Zusammensetzung auf Polyacrylatbasis, die

a) mindestens ein vernetzbares Poly(meth)acrylat;
b) mindestens ein Organosilan, das einen Substituenten mit einer cyclischen Etherfunktion aufweist; und
c) mindestens eine für die Reaktion des vernetzbaren Poly(meth)acrylats mit der cyclischen Etherfunktion beschleunigende Substanz

enthält.

Aufgabe der Erfindung ist es, leistungsstarke Haftklebmassen, insbesondere für stark klebende doppelseitige Haftklebebänder, anzubieten. Die Haftklebmassen sollen Oberflächen mit unterschiedlichen Oberflächenenergien, z.B. Metalle, Kunststoffoberflächen wie PP, PE, Polycarbonat sowie Automobillacke, schnell benetzen und dabei eine hohe Adhäsion aufbauen. Weiterhin sollen die Haftklebmassen bzw. die damit hergestellten Verklebungen eine gute Scherfestigkeit auch bei erhöhten Temperaturen, eine hohe Feuchtwärmebeständigkeit sowie eine hohe Verklebungsfestigkeit bei dynamischer Belastung, letzteres insbesondere bei niedrigen Temperaturen, aufweisen. Schließlich soll eine dauerhafte mechanische Belastung der Verklebung nicht zu einer Entnetzung des Klebebandes von der Oberfläche führen.

Der Lösung der Aufgabe liegt der Gedanke zugrunde, als Hauptkomponente der Haftklebmasse ein Poly(meth)acrylat einzusetzen, das wesentlich auf einer Mischung aus Monomeren mit einfach verzweigten und unverzweigten Alkoholkomponenten beruht.

Ein erster und allgemeiner Gegenstand der Erfindung ist eine Haftklebmasse, die zu mindestens 50 Gew.-%, bezogen auf das Gesamtgewicht der Haftklebmasse, mindestens ein Polymer A enthält, das auf die folgende Monomerzusammensetzung zurückgeführt werden kann:

a1) 55 bis 75 Gew.-% 2-Propylheptylacrylat (PHA) und/oder Isodecylacrylat;
a2) 20 bis 40 Gew.-% mindestens eines (Meth)Acrylsäureesters, dessen Alkoholkomponente ein linearer $C_1$-$C_{18}$-Alkohol zugrundeliegt;
a3) 5 bis 15 Gew.-% Acrylsäure,

ausgenommen ein Polymer, das in folgenden Schritten erhalten wird:

- Befüllen eines für radikalische Polymerisationen konventionellen 300 I-Reaktors mit 62,0 kg 2-Propylheptylacrylat, 27,0 kg Butylacrylat und 11,0 kg Acrylsäure sowie 72,4 kg Aceton/isopropanol (94:6);
- 45minütiges Durchleiten von Stickstoffgas unter Rühren;
- Hochheizen des Reaktors auf 58 °C;
- Zugabe von 50 g 2,2'-Azobis(2-methylbutyronitril);
- Erwärmen des äußeren Heizbades auf 75 °C und konstante Durchführung der Reaktion bei dieser Außentemperatur;
- Zugabe von 50 g 2,2'-Azobis(2-methylbutyronitril) nach 1 h Reaktionszeit;
- Verdünnen mit 20 kg Aceton/Isopropanol (94:6) nach 3 h und mit 10 kg Aceton/Isopropanol (94:6) nach 6 h;
- Zugabe von jeweils 0,15 kg Bis-(4-tert-butylcyclohexyl)peroxydicarbonat nach 5,5 und nach 7 h zur Reduktion der Restinitiatoren;
- Abbruch der Reaktion nach 24 h Reaktionszeit und Herunterkühlen auf Raumtemperatur.

Eine erfindungsgemäße Haftklebmasse zeichnet sich insbesondere durch eine schnelle Benetzung niedrigenergetischer Oberflächen und hohe Entnetzungsresistenz auch bei anhaltender mechanischer Belastung der Verklebung sowie durch gute sonstige klebtechnische Eigenschaften aus.

Unter einer Haftklebmasse wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ •cos$(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ •sin$(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Der Begriff "(Meth)Acrylsäureester" wird entsprechend der allgemeinen Auffassung so verstanden, dass darunter sowohl Acrylsäureester als auch Methacrylsäureester subsummiert werden. Entsprechendes gilt für die Bezeichnung "(Meth)acrylat".

Bevorzugt ist die erfindungsgemäße Haftklebmasse unter Einsatz mindestens eines Epoxycyclohexylderivats in Abwesenheit von Protonenakzeptoren, Elektronenpaardonatoren und Elektronenpaarakzeptoren thermisch vernetzt. Eine thermische Vernetzung bewirkt eine vorteilhafte homogene Vernetzung durch die gesamte Masseschicht hindurch, während beispielsweise bei strahlungsvernetzten Massen ein Vernetzungsprofil mit zum Inneren der Masse hin abnehmender Vernetzungsdichte beobachtet wird. Eine homogen vernetzte Haftklebmasseschicht ermöglicht die gleichmäßige Verteilung von Spannungen, wie sie bei einer Belastung der Verklebung auftreten können. Adhäsive und kohäsive Eigenschaften lassen sich für die gesamte Schicht sehr exakt balancieren, so dass belastbare Verklebungen mit exakt vorhersagbarem Eigenschaftsprofil erhalten werden können. Besonders bevorzugt ist die erfindungsgemäße Haftklebmasse unter Einsatz mindestens eines Epoxycyclohexylderivats in Abwesenheit jeglicher Vernetzungsbeschleuniger thermisch vernetzt.

Die erfindungsgemäße Haftklebmasse enthält bevorzugt kein Klebkraft steigerndes Harz. Üblicherweise zur Klebkraftsteigerung von Haftklebmassen zugesetzte Harze umfassen beispielsweise aliphatische Kohlenwasserstoffharze, aromatische Kohlenwasserstoffharze, alkylaromatische Kohlenwasserstoffharze; Terpenharze, Terpenphenolharze; Kolophoniumharze, insbesondere hydrierte, nichthydrierte und disproportionierte Kolophoniumharze; funktionelle Kohlenwasserstoffharze und Naturharze. Die Abwesenheit von Klebkraft steigernden Harzen wirkt sich positiv auf die kohäsiven Eigenschaften erfindungsgemäßer Haftklebmassen aus, wobei diese an sich sehr weich und anschmiegsam sind und einen hohen Tack aufweisen.

Bevorzugt weist das Polymer A ein gewichtsmittleres Molekulargewicht $M_w$ von mindestens 500.000 g/mol, besonders bevorzugt von mindestens 700.000 g/mol auf. Ebenfalls bevorzugt weist das Polymer A ein gewichtsmittleres Molekulargewicht $M_w$ von maximal 1.700.000 g/mol auf. Die Polydispersität PD, also die Breite der Molmassenverteilung, die als Quotient des gewichtsmittleren Molekulargewichts $M_w$ und des zahlenmittleren Molekulargewichts $M_n$ ermittelt wird, beträgt für das Polymer A bevorzugt $10 \leq PD \leq 100$, besonders bevorzugt $20 \leq PD \leq 80$.

In einer Ausführungsform enthält die erfindungsgemäße Haftklebmasse einen Blend aus einem oder mehreren Polymeren A und einem oder mehreren Synthesekautschuken. Der bzw. die Synthesekautschuke sind bevorzugt ausgewählt aus der Gruppe bestehend aus Styrol-Butadien-Styrol-Kautschuken; Styrol-Isopren-Styrol-Kautschuken und hydrierten Derivaten der vorgenannten Kautschuke.

Ein weiterer Gegenstand der Erfindung ist ein Klebeband, das einen geschäumten Träger und eine erfindungsgemäße Haftklebmasse umfasst. Bevorzugt weist der geschäumte Träger einen syntaktischen Polymerschaum auf. Der Begriff "syntaktischer Schaum" beschreibt eine Sonderform eines geschlossenzelligen Schaumes, dessen Hohlräume durch Glashohlkugeln, keramische Hohlkugeln und/oder Polymerhohlkugeln gebildet werden.

Auf der Rückseite der syntaktischen Polymerschaumschicht kann zur Stabilisierung bzw. zur Abdeckung beispielsweise ein Liner oder ein herkömmliches Folienmaterial vorgesehen sein, so dass mindestens ein Dreischicht-System, umfassend das erfindungsgemäße, mindestens zweischichtige Klebeband, vorliegt.

Bei hinreichend dicken Polymerschaumschichten kann die der Haftklebmassenschicht abgewandte, in Zweischichtsystemen freiliegende Seite der Polymerschaumschicht auch dadurch stabilisiert sein, dass sie durch einen Vernetzungsprozess mit einer geringen Eindringtiefe stark vernetzt wird, so dass nur ein Teil der Schaumträgerschicht stark vernetzt wird, während auf der anderen, der Haftklebmassenschicht zugewandten Seite des Trägers die ursprünglich vorhandenen, eher viskoelastischen Eigenschaften erhalten bleiben.

Besonders bevorzugt ist auf beiden Seiten des geschäumten Trägers eine Haftklebmasse angeordnet, wobei eine der Haftklebmassen eine erfindungsgemäße Haftklebmasse ist. Insbesondere ist auf beiden Seiten des geschäumten Trägers eine erfindungsgemäße Haftklebmasse angeordnet. Dies ist vorteilhaft, weil in diesem Fall beide Seiten des Klebebandes die vorteilhaften klebtechnischen Eigenschaften der erfindungsgemäßen Haftklebmasse aufweisen.

In einer speziellen Ausführungsform ist auf beiden Seiten des geschäumten Trägers eine Haftklebmasse angeordnet, und die beiden Haftklebmassen enthalten identische Zusätze in identischer Konzentration, insbesondere funktionelle Zusätze und/oder Füllstoffe. Ebenso können beide Haftklebmassen auch frei von funktionellen Zusätzen und/oder Füllstoffen sein. In einer besonderen Ausführungsform ist auf beiden Seiten des geschäumten Trägers eine Haftklebmasse, insbesondere eine erfindungsgemäße Haftklebmasse, angeordnet, und die Haftklebmassen sind chemisch, physikalisch und/oder in ihren Ausmaßen identisch. Insbesondere sind beide Haftklebmassen vollständig identisch, wobei unwesentliche Nichtübereinstimmungen, wie sie beispielsweise aus Verunreinigungen im Rahmen der Allgegenwartskonzentration, aus produktionsbedingten Ungenauigkeiten und ähnlichen sonstigen Quellen resultieren können, unbeachtlich sind.

Der geschäumte Träger enthält bevorzugt zu mindestens 50 Gew.-%, bezogen auf das Gesamtgewicht des Schaums, mindestens ein Polymer ausgewählt aus der Gruppe bestehend aus Kautschuken, insbesondere Naturkautschuken, Polyurethanen, Poly(meth)acrylaten und Styrolblockcopolymeren sowie Blends der genannten Polymere. Besonders bevorzugt enthält der geschäumte Träger zu mindestens 50 Gew.-%, bezogen auf das Gesamtgewicht des Schaums, ein oder mehrere Poly(meth)acrylate.

Insbesondere enthält der geschäumte Träger zu mindestens 50 Gew.-%, bezogen auf das Gesamtgewicht des Schaums, mindestens ein Poly(meth)acrylat B, das auf die folgende Monomerzusammensetzung zurückgeführt werden kann:

> b1) 65 bis 97 Gew.-% Ethylhexylacrylat und/oder Butylacrylat,
> b2) 0 bis 30 Gew.-% Methylacrylat,
> b3) 3 bis 15 Gew.-% Acrylsäure.

Bevorzugt weist bzw. weisen die im geschäumten Träger enthaltenen Polymere, besonders bevorzugt das Polymer B, ein gewichtsmittleres Molekulargewicht $M_w$ von mindestens 500.000 g/mol, besonders bevorzugt von mindestens 700.000 g/mol auf. Ebenfalls bevorzugt weisen die im geschäumten Träger enthaltenen Polymere ein gewichtsmittleres Molekulargewicht $M_w$ von maximal 1.700.000 g/mol auf. Die Polydispersität PD, also die Breite der Molmassenverteilung, die als Quotient des gewichtsmittleren Molekulargewichts $M_w$ und des zahlenmittleren Molekulargewichts $M_n$ ermittelt wird, beträgt für die im geschäumten Träger enthaltenen Polymere bevorzugt $10 \leq PD \leq 100$, besonders bevorzugt $20 \leq PD \leq 80$.

Sowohl die in der erfindungsgemäßen Haftklebmasse als auch die im geschäumten Träger enthaltenen Polymere lassen sich vorzugsweise durch freie radikalische Polymerisation, bevorzugt in Lösung, gemäß dem Stand der Technik herstellen. Im Falle einer gegebenenfalls nachfolgenden Verarbeitung aus der Schmelze wird das Lösungsmittel nach der Polymerisation abgezogen.

Der geschäumte Träger wird bevorzugt aus der Schmelze zur Schicht ausgeformt. Bevorzugt findet dabei eine thermische Vernetzung der geschäumten Schicht statt. Auch die erfindungsgemäßen Haftklebmassen können aus der Schmelze ausgeformt werden. Da diese Schichten üblicherweise aber nur in Schichtdicken bis zu 100 $\mu$m erzeugt werden, lassen sie sich hervorragend auch aus Lösung beschichten und danach trocknen.

Verfahrenstechnisch bedingt lassen sich sehr dicke Polymerschichten wie die geschäumte Trägerschicht sehr viel besser aus der Schmelze (sogenannte Hotmelts) als aus der Polymer-Lösung herstellen. Zur Definition einer Schmelze eines amorphen Polymers - wie beispielsweise eines Polyacrylats - werden erfindungsgemäß die in F. R. Schwarzl, Polymermechanik: Struktur und mechanisches Verhalten von Polymeren, Springer Verlag, Berlin, 1990 angegebenen Kriterien verwendet, wonach die Viskosität die Größenordnung von maximal $\eta \approx 10^4$ Pa·s aufweist und die innere Dämpfung tan $\delta$ Werte von $\geq 1$ erreicht.

Wenn die Polymerschichten der erfindungsgemäßen Haftklebmassen und des geschäumten Trägers des erfindungsgemäßen Klebebandes durch eine Beschichtung aus der Schmelze hergestellt werden, ergibt sich ein aus der bevorzugten thermischen Vernetzung resultierendes Problem. Einerseits muss der thermische Vernetzer zur Initiierung einer nachfolgenden thermischen Vernetzung vor der Beschichtung zugesetzt werden, andererseits ist der Vernetzer dann den hohen Temperaturen zur Erzeugung und Aufrechterhaltung der Polymerschmelze ausgesetzt. Dies kann bereits vor dem Eintreten einer kontrollierten Vernetzung zu einer unkontrollierten Polymervernetzung (sogenannte Vergelung) führen. Um diese Vergelung weitestgehend zu unterdrücken, werden im Hotmelt-Verfahren üblicherweise sehr reaktionsträge Vernetzer eingesetzt, und zwar erst kurz vor der Beschichtung. Um aber dennoch nach Beschichtung befriedigende Vernetzungsergebnisse zu erzielen, werden daneben häufig sogenannte Beschleuniger beigemischt.

Auch für aus Lösung beschichtete Polymersysteme, die thermisch vernetzt werden sollen, kann der Einsatz von Beschleunigern sinnvoll sein und wird häufig realisiert. Der thermisch initiierte Vernetzungsvorgang wird üblicherweise verbunden mit der thermischen Entfernung des Lösungsmittels aus der aufgetragenen Schicht (also der Trocknung der Masseschicht). Ein zu schnelles Entfernen des Lösungsmittels führt dabei zu einer schlecht ausgebildeten, ungleichmäßigen und inhomogenen Schicht, da ein zu radikales Trocknen beispielsweise zu Blasenbildung führt. Aus diesem Grund wird die Trocknung bevorzugt bei moderaten Temperaturen durchgeführt. Um dennoch eine gute und hinreichend schnell verlaufende Vernetzung zu garantieren, sind auch den Lösungsmittelsystemen üblicherweise Beschleuniger zugesetzt.

Eine Beschichtung aus Lösung wird häufig dann bevorzugt, wenn die Dicke der resultierenden Schichten nicht sehr groß ist, so dass eine erhöhte Viskosität der aufzubringenden Polymerlösung (im Vergleich zu einer weitgehend lösemittelfreien Schmelze) nicht mit signifikanten Problemen verbunden ist.

Erfindungsgemäß bevorzugt ist die geschäumte Trägerschicht unter Beteiligung von Beschleunigern vernetzt. Als Beschleuniger oder auch beschleunigend wirkende Substanz werden insbesondere Protonenakzeptoren, Elektronenpaardonatoren (Lewisbasen) und/oder Elektronenpaarakzeptoren (Lewissäuren) eingesetzt. Beschleuniger sind solche Verbindungen oder Chemikalien, die Vernetzungsreaktionen insofern unterstützen, als sie für eine erfindungsgemäß hinreichende Reaktionsgeschwindigkeit sorgen. Dies geschieht insbesondere katalytisch (durch Aktivierung der Vernetzungsreaktion) und/oder durch Umwandlung funktioneller Gruppen der Vernetzersubstanzen oder der zu vernetzenden Makromoleküle zu funktionellen Gruppen, die im Sinne einer Verknüpfungsreaktion der Makromoleküle untereinander (Brückenbildung, Netzwerkbildung) oder über die Vernetzersubstanzen mit weiteren funktionellen Gruppen reagieren können.

Die Beschleuniger selbst nehmen nicht an einer solchen Verknüpfungsreaktion teil (vernetzen selbst also nicht), können aber in Form von Reaktionsprodukten oder Fragmenten in das Netzwerk eingebunden oder an dieses geknüpft sein. Ein Beschleuniger sorgt also für eine wesentliche Verbesserung der Reaktionskinetik der Vernetzungsreaktion.

Vernetzer hingegen sind solche Substanzen, die durch eigene funktionelle Gruppen an einer Reaktion, insbesondere einer Additions- oder Substitutionsreaktion, teilnehmen können, die zu einer Brückenbildung zur Netzwerkbildung führt. Weiterhin können funktionelle Gruppen enthalten sein, die - beispielsweise unter dem erwähnten Einfluss von Beschleunigern oder durch andere Vorgänge - im Rahmen der Vernetzungsreaktion in solche funktionellen Gruppen umgewandelt werden, die im Anschluss zu einer Brückenbildung zwischen den Makromolekülen der zu vernetzenden Polymere führen.

Die Vernetzungsreaktion in Abwesenheit eines Beschleunigers würde bei ausgewählten Reaktionsparametern - erfindungsgemäß insbesondere einer Temperatur, die unterhalb der Verarbeitungstemperatur der Polymere der geschäumten Trägerschicht liegt - nicht oder nur unzureichend schnell ablaufen. Beispielsweise sind viele Epoxide, die als Vernetzer für Polyacrylate eingesetzt werden, von Natur aus eher reaktionsträge, so dass sie ohne Beschleuniger keine befriedigenden Vernetzungsergebnisse erbringen.

Protonendonoren, insbesondere Carbonsäuren bzw. Carbonsäuregruppen bzw. deren deprotonierten Derivate, sind im erfindungsgemäßen Sinne nicht zu den Beschleunigern zu zählen.

Die Anwesenheit von Beschleunigern in den erfindungsgemäßen Haftklebmassen weist durchaus auch Nachteile auf. So neigen insbesondere stickstoffhaltige Beschleuniger wie beispielsweise Amine durch Oxidationsprozesse mit der Zeit zur Vergilbung, so dass derartige Beschleunigersysteme insbesondere für transparente Haftklebmassen oder mehrschichtige Haftklebebänder, die insbesondere für optische Zwecke eingesetzt werden sollen, schlecht oder nicht geeignet sind.

Beschleuniger, die salzartig sind oder Salze bilden (insbesondere basische Beschleuniger), wie etwa die vorgenannten Amine oder auch Zinkchlorid führen zu einer erhöhten Feuchtigkeitsaufnahmekapazität des Produktes, da Salze in der Regel hygroskopische Eigenschaften besitzen. Insbesondere für Haftklebmassen, die aufgrund des beabsichtigten Einsatzgebietes eine sehr hohe Feuchtwärmebeständigkeit aufweisen sollen, sind derartige Beschleuniger nicht geeignet.

Erfindungsgemäß wird daher angestrebt, die thermische Vernetzung der erfindungsgemäßen Haftklebemassen, insbesondere für solche, die in Luftkontakt stehen, mit Epoxycyclohexylderivaten zu erzielen, ohne dass Beschleuniger beigemischt sind. Die Abwesenheit von Beschleunigern bezieht sich dabei insbesondere auf extern zugesetzte (also nicht einpolymerisierte bzw. in das Polymergerüst eingebaute) Beschleuniger; besonders bevorzugt enthalten die erfindungsgemäßen Haftklebmassen aber weder extern zugesetzte noch einpolymerisierte Beschleuniger, insbesondere gar keine Beschleuniger.

Die Beschaffenheit der Polymerschichten, hier insbesondere der erfindungsgemäßen Haftklebmassen, und ihre physikalischen Eigenschaften (zum Beispiel Viskoelastizität, Kohäsion, elastischer Anteil) lassen sich durch die Art und den Grad ihrer Vernetzung beeinflussen.

Eine erfindungsgemäße Haftklebmasse ist daher bevorzugt durch mindestens ein Epoxycyclohexylderivat, besonders bevorzugt durch mindestens ein Epoxycyclohexylcarboxylat, insbesondere mindestens durch (3,4-Epoxycyclohexan)methyl-3,4-epoxycyclohexylcarboxylat (CAS 2386-87-0) vernetzt.

Epoxycyclohexylderivate liegen in der zu vernetzenden Haftklebmasse bevorzugt in einer Gesamtmenge von bis zu 0,4 Gew.-%, sehr bevorzugt bis zu 0,3 Gew.-%, jeweils bezogen auf die Gesamtmenge der zu vernetzenden Polymere, vor. Bei Vernetzermengen von mehr als 0,3 Gew.-Teilen auf 100 Gew.-Teile Polymer ist zunehmend mit Einbußen der Klebkraft zu rechnen und die Benetzung verschlechtert sich dramatisch. Besonders bevorzugte Vernetzermengen liegen beispielsweise im Bereich von 0,12 bis 0,30 Gew.-%, insbesondere im Bereich von 0,15 bis 0,25 Gew.-%, jeweils bezogen auf die Gesamtmenge der zu vernetzenden Polymere.

Auch der geschäumte Träger ist bevorzugt thermisch vernetzt, was zu einer sehr homogenen Ausbildung dieser Schicht führt. Besonders bevorzugt ist der geschäumte Träger durch mindestens einen Glycidylether, insbesondere mindestens einen Polyglycidylether, ganz bevorzugt mindestens durch Pentaerythrittetraglycidether (CAS 3126-63-4) thermisch vernetzt. Die Vernetzung des geschäumten Trägers erfolgt bevorzugt in Kombination mit einem Amin, besonders bevorzugt mit Isophorondiamin (CAS 2855-13-2), als Beschleuniger. Der Gesamtanteil der Vernetzer an der zu vernetzenden geschäumten Trägerschicht beträgt bevorzugt bis zu 1,0 Gew.-%, stärker bevorzugt bis zu 0,8 Gew.-%, jeweils bezogen auf die Gesamtmenge der zu vernetzenden Polymere. Bevorzugte Vernetzermengen liegen beispielsweise im Bereich von 0,05 bis 0,6, insbesondere von 0,10 bis 0,5 Gew.-%, jeweils bezogen auf die Gesamtmenge der zu vernetzenden Polymere.

Der Beschleuniger liegt bevorzugt in einer Menge von 0,1 bis 1,5 Gew.-%, stärker bevorzugt von 0,15 bis 1,2 Gew.-%, jeweils bezogen auf die Gesamtmenge der zu vernetzenden Polymere, vor.

Die Anwesenheit eines Aminbeschleunigers im geschäumten Träger ist insbesondere bei Drei- oder Mehrschichtaufbauten unkritisch, da die Trägerschicht in diesen Fällen durch die außenliegenden Klebmassen- bzw. Haftklebmassenschichten von dem Einfluss oxidierender Substanzen wie etwa Luftsauerstoff weitgehend abgeschirmt wird.

Die thermische Vernetzung des geschäumten Trägers und der einen oder beiden Haftklebmasseschichten kann gleichzeitig durchgeführt werden, etwa wenn die Haftklebmassen auf den noch nicht vernetzen geschäumten Träger beschichtet werden oder die Schichten in einem speziellen Verfahren gemeinsam ausgeformt werden.

Die einzelnen Schichten können aber auch in separaten Verfahren thermisch vernetzt werden, etwa wenn die Haftklebmassen auf die bereits thermisch vernetzte Trägerschicht beschichtet und dann thermisch vernetzt werden oder wenn die Haftklebmassen an einem anderen Ort ausgeformt und thermisch vernetzt werden - etwa auf einem temporären Träger wie etwa einem Trennmaterial - und dann auf den bereits vernetzten geschäumten Träger aufkaschiert werden. Insbesondere dafür kann es vorteilhaft sein, den geschäumten Träger und/oder die Haftklebmasse(n) chemisch und/oder physikalisch vorzubehandeln, beispielsweise durch Corona- und/oder Plasma-Behandlung und/oder reaktive Corona- und/oder reaktive Plasmabehandlung (Verwendung von Gasen, wie z.B. Stickstoff, Sauerstoff, Fluor und/oder weiteren) und/oder Flammenbehandlung (Flame-Treatment).

Die Herstellung erfindungsgemäßer doppelseitiger, insbesondere dreischichtiger Klebebänder kann auch entsprechend der Darstellung für Drei- bzw. Mehrschichtsysteme in der EP 05 792 143 A1 erfolgen. Die dort beschriebenen Herstellungs- und Beschichtungsverfahren können analog auch für die Klebebänder dieser Schrift angewandt werden; der Offenbarungsgehalt der EP 05 792 143 A1 soll daher als in die vorliegende Offenbarung explizit eingeschlossen gelten. Gleiches gilt für die Darstellung der in der EP 05 792 143 A1 beschriebenen Produktaufbauten. Insbesondere die Schäumung mit Mikroballons zur Herstellung des geschäumten Trägers erfolgt vorteilhaft gemäß den in den EP 2 414 143 A1 und DE 10 2009 015 233 A1 beschriebenen Verfahren.

Der geschäumte Träger ist bevorzugt als sehr hochviskose Flüssigkeit anzusehen, die unter Druckbelastung das Verhalten des Fließens (auch als "kriechen" bezeichnet) zeigt. Viskoelastische Massen in diesem Sinne weisen bevorzugt bereits durch die Schwerkraft, also unter Belastung durch ihr eigenes Gewicht, die Fähigkeit auf, mehr oder weniger langsam zu fließen und insbesondere auf einen Untergrund aufzufließen bzw. einen Untergrund zu benetzen. Mindestens aber findet dieser Effekt unter einer externen Druckeinwirkung statt. Eine Druckerhöhung, etwa durch Andrücken des Klebebandes auf einen Untergrund, kann dieses Verhalten deutlich beschleunigen.

Viskoelastische Massen im Sinne des vorstehend beschriebenen, bevorzugten geschäumten Trägers besitzen weiterhin die Fähigkeit, bei langsamer Krafteinwirkung die auf sie einwirkenden Kräfte zu relaxieren. Sie sind also in der Lage, die Kräfte in Schwingungen und/oder Verformungen, die auch - zumindest zum Teil - reversibel sein können, zu dissipieren, somit die einwirkenden Kräfte "abzupuffern" und eine mechanische Zerstörung durch die einwirkenden Kräfte bevorzugt zu vermeiden, zumindest aber zu verringern oder den Zeitpunkt des Eintretens der Zerstörung hinauszuzögern. Im Falle einer sehr schnell einwirkenden Kraft zeigen viskoelastische Massen üblicherweise ein elastisches Verhalten, also das Verhalten einer vollständig reversiblen Verformung, wobei Kräfte, die über das Elastizitätsvermögen der Masse hinausgehen, zu einem Bruch führen können.

Im Gegensatz hierzu stehen elastische Materialien, die auch bei langsamer Krafteinwirkung das beschriebene elastische Verhalten zeigen. Elastisches Verhalten wirkt sich grundsätzlich negativ auf die Benetzung aus. Daher ist es vorteilhaft, dass auch die erfindungsgemäßen Haftklebmassen trotz eines ausgeprägt elastischen Verhaltens unter schneller Kraftbeanspruchung insgesamt eher ein viskoelastisches Verhalten zeigen, sich insbesondere auf einer langen Zeitskala eher viskos wie eine Flüssigkeit verhalten und somit eine optimale und insbesondere schnelle Benetzung bewirken.

Der geschäumte Träger enthält bevorzugt mindestens ein Schäumungsmittel, ausgewählt aus der Gruppe bestehend aus Polymerhohlkugeln, Polymervollkugeln, Glashohlkugeln, Glasvollkugeln, keramische Hohlkugeln, keramische Vollkugeln und Kohlenstoffvollkugeln ("Carbon Micro Balloons"). Besonders bevorzugt enthält der geschäumte Träger zumindest zum Teil expandierte polymere Mikrohohlkörper; insbesondere solche polymeren Mikrohohlkörper, die aus ihrem Grundzustand heraus bei Wärme- und/oder anderer Energiezufuhr expandieren können, wie gas- und/oder flüssigkeitsgefüllte Polymerkugeln, deren Hülle aus einem thermoplastischen Material wie Polymethylmethacrylat, PVDC oder Polystyrol besteht. Auch die erfindungsgemäßen Haftklebmassen können derartige Schäumungsmittel enthalten.

Der geschäumte Träger enthält bevorzugt Kieselsäure, besonders bevorzugt gefällte, mit Dimethyldichlorsilan oberflächenmodifizierte Kieselsäure. Dies ist vorteilhaft, weil sich damit die Wärmescherfestigkeit der Trägerschicht einstellen, insbesondere erhöhen lässt. Kieselsäuren lassen sich darüber hinaus hervorragend für transparente Träger verwenden. Bevorzugt ist Kieselsäure bis zu 15 Gew.-%, bezogen auf die Gesamtheit aller im geschäumten Träger enthaltenen Polymere, im geschäumten Träger enthalten. Auch die erfindungsgemäßen Haftklebmassen können Kieselsäure enthalten.

Der geschäumte Träger und/oder die erfindungsgemäßen Haftklebmassen, insbesondere die erfindungsgemäßen Haftklebmassen, enthalten bevorzugt mindestens einen Weichmacher. Der Weichmacher ist bevorzugt ausgewählt aus der Gruppe bestehend aus (Meth)Acrylat-Oligomeren, Phthalaten, Cyclohexandicarbonsäureestern (z.B. Hexamoll® DINCH, Fa. BASF, CAS 166412-78-8), wasserlöslichen Weichmachern, Weichharzen, Phosphaten (z.B. Levagard® DMPP, Fa. Lanxess, CAS 18755-43-6) und Polyphosphaten.

Erfindungsgemäße, insbesondere doppelseitige Klebebänder weisen allgemein und in den vorstehend beschriebenen Ausführungsformen eine Reihe von Vorteilen auf:

Durch die bevorzugte thermische Vernetzung weisen die Klebebänder zum einen kein Vernetzungsprofil durch ihre Schichten hindurch auf. Viskoelastische Schichten bzw. Haftklebmasseschichten, die durch aktinische Strahlung (ultraviolette Strahlung, Elektronenstrahlen) vernetzt wurden, weisen ein Vernetzungsprofil durch die jeweilige vernetzte Schicht hindurch auf. Thermisch vernetzte Masseschichten zeigen dieses Verhalten nicht, da die Wärme gleichmäßig in die Schicht eindringen kann.

Mittels Epoxycyclohexylderivaten thermisch vernetzte erfindungsgemäße Haftklebmassen weisen eine höhere Klebkraft auf als mittels anderer Vernetzer vernetzte Systeme. Dieser Befund hat eine große Bedeutung für die erfindungsgemäßen Klebebänder. Setzt man einen geschäumten Träger auf Polyacrylatbasis ein und rüstet diesen auf zumindest einer Seite mit einer erfindungsgemäßen, thermisch, insbesondere mit Epoxycyclohexylderivaten vernetzten Haftklebmasse aus, sind sowohl die Klebkräfte als auch das Benetzungsverhalten auf dieser Klebebandseite besser als bei Systemen,

- die die entsprechende Haftklebmasse auf einem elastischen Polymerträger aufweisen oder
- die den gleichen, bevorzugt viskoelastischen Träger, aber eine andere, wenn auch an sich deutlich klebrigere, Haftklebmasse aufweisen.

Für die Klebkraft eines erfindungsgemäßen Klebebandes spielt nicht nur die außenliegende Haftklebemasse eine Rolle, sondern gleichfalls der geschäumte Träger, so dass für die hervorragenden Klebeeigenschaften das Gesamtsystem von Bedeutung ist. Die den erfindungsgemäßen Klebebändern zugrundeliegende Idee beinhaltet also die Kombination einer bevorzugt viskoelastischen, relativ weichen Schaumschicht mit einer an sich (also beispielsweise mit elastischen Folienuntergründen als Träger) nicht stark haftklebrigen Haftklebmasseschicht. Dies resultiert darin, dass durch das Zusammenspiel der beiden Schichten das Klebeverhalten auf der Seite der Haftklebmasseschicht verbessert wird und somit Klebkräfte sowie ein Benetzungsverhalten erzielt werden, welche deutlich besser sind als bei an sich stärker haftklebrigen Haftklebmassenschichten für sich genommen oder auf elastischen Trägern.

Mit der vorliegenden Erfindung ist es gelungen, eine kohäsive Haftklebmasse mit an sich relativ geringer Klebrigkeit als Haftklebmasse für ein sehr klebkräftiges sowie schnell benetzendes Klebeband zu qualifizieren, indem angrenzend an diese kohäsive Polymerschicht eine Schaumschicht vorgesehen ist.

Bei Klebebändern, bei denen die Klebkraft allein durch die außen liegende Haftklebmasse determiniert wird, muss häufig ein Kompromiss zwischen Adhäsion und Kohäsion eingegangen werden (siehe einleitender Teil der vorliegenden Beschreibung). Erfindungsgemäß ist es gelungen, durch Steuerung der Eigenschaften zweier unterschiedlicher Schichten, die einzeln optimiert werden können, hervorragende Gesamteigenschaften zu erzielen. Insbesondere die Klebkraft der erfindungsgemäßen Klebebänder auf Stahl sowie auf unpolaren Autolacken beträgt auf der Seite der erfindungsgemäßen Haftklebmasse bevorzugt nach 12 Stunden, stärker bevorzugt nach 8 Stunden mindestens 40 N/cm oder mehr. Besonders bevorzugt ist diese Klebkraft gar nicht messbar, da eine Kraft von mehr als 50 N/cm zu einem gewünschten kohäsiven Spalten des syntaktischen Polymerschaums führt. Zudem besitzen die erfindungsgemäßen Klebebänder lange Scherstandzeiten bei hohen Temperaturen (beispielsweise bei ca. 70 °C).

Zur besseren Handhabung oder Lagerung der erfindungsgemäßen Klebebänder können diese auf einer oder auch auf beiden Seiten mit einem Trennmaterial, bei dem es sich beispielsweise um Silikone, Folien, silikonisierte Folien oder Papiere, oberflächenbehandelte Folien oder Papiere oder dergleichen, also um sogenannte Liner handelt, versehen sein.

Die erfindungsgemäßen Klebebänder können über die bisher beschriebenen Schichten hinaus weitere Schichten, also Mehrschichtsysteme mit einer Schichtenabfolge größer drei, umfassen. Es ist insbesondere vorteilhaft, wenn dabei die geschäumte Trägerschicht bevorzugt unmittelbar oder zumindest mittelbar mit einer erfindungsgemäßen Haftklebmasseschicht ausgerüstet ist, weil dann die schon beschriebenen klebtechnischen Vorteile realisiert werden.

Die erfindungsgemäßen Klebebänder zeichnen sich dadurch aus, dass sie als sehr dicke Produkte hergestellt werden können, die zudem sehr hohe Klebkräfte besitzen. Solche Produkte finden beispielsweise Anwendung in der Baubranche, in der Automobilindustrie oder bei Verklebungen, die Unebenheiten oder Hohlräume ausgleichen müssen.

Aufgrund des guten Relaxationsverhaltens der geschäumten Trägerschicht sind die erfindungsgemäßen Klebebänder geeignet, Krafteinwirkungen wie mechanische Beanspruchungen, Stöße und dergleichen abzufangen und deren Energie zu dissipieren. Die erfindungsgemäßen Klebebänder sind daher auch überall dort sehr gut geeignet, wo eine stoß- und/oder erschütterungsdämpfende Wirkung gewünscht ist, wie etwa zur Verklebung zerbrechlicher Gegenstände, im Elektronikbereich oder dergleichen. Von besonderem Vorteil ist es, die erfindungsgemäßen Klebebänder einzusetzen, wenn Materialien mit unterschiedlichen Wärmeausdehnungskoeffizienten miteinander verklebt werden sollen, da die erfindungsgemäßen Klebebänder durch ihr Relaxationsvermögen Spannungen dissipieren können, die durch das unterschiedliche Ausdehnungsverhalten der miteinander verklebten Gegenstände bzw. Oberflächen resultieren. Herkömmliche Klebebänder neigen dagegen bei stark unterschiedlichem Ausdehnungsverhalten der verklebten Gegenstände häufig zum Versagen, das heißt es kommt zur Schwächung oder gar zum Bruch der Verklebungsstelle.

Die erfindungsgemäßen Klebebänder können in üblichen Klebebanddicken von einigen bis einigen hundert Mikrometern, besonders vorteilhaft aber in Dicken von mehr als 300 $\mu$m, beispielweise 500 $\mu$m oder mehr, 1000 $\mu$m oder mehr, 1500 $\mu$m oder mehr, 2000 $\mu$m oder mehr oder auch 3000 $\mu$m oder mehr hergestellt werden. Auch noch dickere Produkte sind realisierbar.

Bevorzugt weisen bei einem erfindungsgemäßen Klebeband der geschäumte Träger eine Schichtdicke von 300 bis 2500 $\mu$m, stärker bevorzugt von 400 bis 2400 $\mu$m, und die mindestens eine Haftklebmasse eine Schichtdicke von 40 bis 150 $\mu$m, stärker bevorzugt von 50 bis 100 $\mu$m, auf.

Die erfindungsgemäßen Klebebänder eignen sich auch besonders gut zur Verklebung und Befestigung von Zierleisten, Emblemen und Stoßfängern auf unpolaren Automobillacken. Falls benötigt, können diese Oberflächen vor der Verklebung noch mit einem Primer behandelt werden, um die Verklebungsfestigkeit noch weiter zu steigern.

Weitere Anwendungsgebiete, für die sich die erfindungsgemäßen Klebebänder hervorragend eignen, sind zum Beispiel der Gebäudebau bzw. -ausbau, die Gebäudeausrüstung und der Architekturbereich (jeweils innen und/oder außen), der Heimwerkerbereich, der Modellbau, die Möbelherstellung, der Schiff- und der Flugzeugbau, die Elektronik- und die Elektroindustrie (beispielsweise für Unterhaltungselektronik, weiße Ware, braune Ware, aufgrund der guten Wärmebeständigkeit auch rote Ware) sowie der Straßenverkehr (Straßenbeschilderung und dergleichen).

**Experimenteller Teil**

Messmethoden:

Feststoffgehalt (Messmethode A1):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert {nach FIKENTSCHER) (Messmethode A2):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC (Messmethode A3):

Die Angaben des gewichtsmittleren Molekulargewichtes $M_W$ und der Polydispersität PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung).

Dichtebestimmung über den Masseauftrag und die Schichtdicke (Messmethode A4)

Das Raumgewicht beziehungsweise die Dichte ρ einer beschichteten Selbstklebemasse wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2] \cdot [m]} = \left[\frac{kg}{m^3}\right]$$

MA = Masseauftrag/Flächengewicht (ohne Linergewicht) in $[kg/m^2]$
d = Schichtdicke (ohne Linerdicke) in [m]

Bei diesem Verfahren wird die Rohdichte erhalten.
Diese Dichtebestimmung eignet sich insbesondere zur Bestimmung der Gesamtdichte fertiger, auch mehrschichtiger, Produkte.

180° Klebkrafttest (Messmethode H1 );

Ein 20 mm breiter Streifen der auf Polyester als Schicht aufgetragenen Haftklebmasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180 ° vom Substrat abgezogen. Alle Messungen wurden bei Raumtemperatur durchgeführt.
Die Messergebnisse sind in N/cm angegeben und sind gemittelt aus drei Messungen.

Scherstandzeit (Messmethode H2);

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm x 13 mm (Länge x Breite), wobei das Klebeband die Prüfplatte am Rand überragte (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigte.
Bei Raumtemperatur wurde ein Gewicht von z.B. 1 kg (10 N) an dem überstehenden Ende des Klebebandes befestigt; das jeweilige Gewicht ist in den Beispielen aufgeführt. Die Messung wurde bei Normalklima (23 °C, 55 % Luftfeuchtigkeit) und bei 70 °C in einem Wärmeschrank durchgeführt.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wurde auf eine mit Aceton gereinigte Stahl-Prüfplatte verklebt, so dass die Stahlplatte das Klebeband rechts und links überragte und das Klebeband die Prüfplatte am oberen Rand um 2 mm überragte. Die Verklebungsfläche der Probe betrug Höhe x Breite = 13mm x 10mm.
Die Verklebungsstelle wurde anschließend mit einer 2 kg-Stahlrolle und einer Geschwindigkeit von 10 m/min sechsmal überrollt. Das Klebeband wurde bündig mit einem stabilen Klebestreifen verstärkt, der als Auflage für den Wegmessfühler diente. Die Probe wurde mittels der Prüfplatte senkrecht aufgehängt.

*Mikroschertest:*

Das zu messende Probenmuster wurde am unteren Ende mit einem Gewicht von 1000 g belastet. Die Prüftemperatur betrug 40 °C, die Prüfdauer 30 Minuten (15 Minuten Belastung und 15 Minuten Entlastung). Die Scherstrecke nach der vorgegebenen Testdauer bei konstanter Temperatur ist als Ergebnis in μm angegeben, und zwar als Maximalwert ["max"; maximale Scherstrecke durch 15minütige Belastung]; als Minimalwert ["min"; Scherstrecke ("Restauslenkung") 15 min nach Entlastung; bei Entlastung erfolgte eine Rückbewegung durch Relaxation]. Angegeben ist ebenfalls der elastische Anteil in Prozent ["elast"; elastischer Anteil = (max - min)·100 / max].

<u>90° Klebkraft Stahkoffene und abgedeckte Seite (Messmethode M1):</u>

Die Bestimmung der Klebkraft Stahl erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wurde vor der Messung gereinigt und konditioniert. Dazu wurde die Platte zunächst mit Aceton abgewischt und danach 5 Minuten an der Luft liegen gelassen, damit das Lösungsmittel abdampfen konnte.

<u>Dreischichtverbund:</u>

Die dem Prüfuntergrund abgewandte Seite des Dreischichtverbundes wurde dann mit einer 50 μm Aluminiumfolie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 2 kg Rolle fünfmal hin und her bei einer Aufrollgeschwindigkeit von 10 m/min überrollt. Unmittelbar nach dem Anrollen wurde die Stahlplatte in eine spezielle Halterung geschoben, die es ermöglicht das Muster in einem Winkel von 90 ° senkrecht nach oben abzuziehen. Die Klebkraftmessung erfolgte mit einer Zwick-Zugprüfmaschine. Beim Applizieren der abgedeckten Seite auf die Stahlplatte wurde die offene Seite des Dreischichtverbundes zunächst gegen die 50 μm Aluminiumfolie kaschiert, das Trennmaterial entfernt und auf die Stahlplatte geklebt, analog angerollt und vermessen.
Die Messergebnisse beider Seiten, offen und abgedeckt, sind in N/cm angegeben und sind gemittelt aus drei Messungen.

<u>Muster auf 23 μm PET-Folie:</u>

Das einseitige Prüfmuster wurde auf den Stahluntergrund aufgebracht und anschließend mit einer 2 kg Rolle fünfmal mit einer Aufrollgeschwindigkeit von 10 m/min angepresst. Unmittelbar nach dem Anrollen wurde die Stahlplatte in eine spezielle Halterung geschoben, die es ermöglicht, das Muster in einem Winkel von 90 ° senkrecht nach oben abzuziehen. Die Klebkraftmessung erfolgte mit einer Zwick-Zugprüfmaschine. Die Messergebnisse sind in N/cm angegeben und sind gemittelt aus drei Messungen.

<u>Scherstandzeit - offene und abgedeckte Seite (Messmethode M2):</u>

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche betrug 20 mm x 13 mm (Länge x Breite). Vor der Messung wurde die Stahlplatte gereinigt und konditioniert. Dazu wurde die Platte zunächst mit Aceton abgewischt und danach 5 Minuten an der Luft liegen gelassen, damit das Lösungsmittel abdampfen konnte. Nach dem Verkleben wurde die offene Seite mit einer 50 μm Aluminiumfolie verstärkt und mit einer 2 kg Rolle zweimal hin und her überrollt. Anschließend wurde eine Gurtschlaufe am überstehenden Ende des Dreischichtverbundes angebracht. Das Ganze wurde dann an einer geeigneten Vorrichtung aufgehängt und mit einem Gewicht von z.B. 1 kg (10 N) belastet; das Gewicht ist jeweils in den Beispielen angegeben. Die Aufhängvorrichtung war so beschaffen, dass das Gewicht die Probe in einem Winkel von 179° +/- 1 ° belastet. Dadurch wurde sichergestellt, dass sich der Dreischichtverbund nicht von der Plattenunterkante abschälen konnte. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wurde die offene Seite zunächst mit der 50 μm Aluminiumfolie verstärkt, das Trennmaterial entfernt und auf die Prüfplatte analog der Beschreibung geklebt. Die Messung wurde bei Normalklima (23 °C, 55 % Luftfeuchtigkeit) durchgeführt.

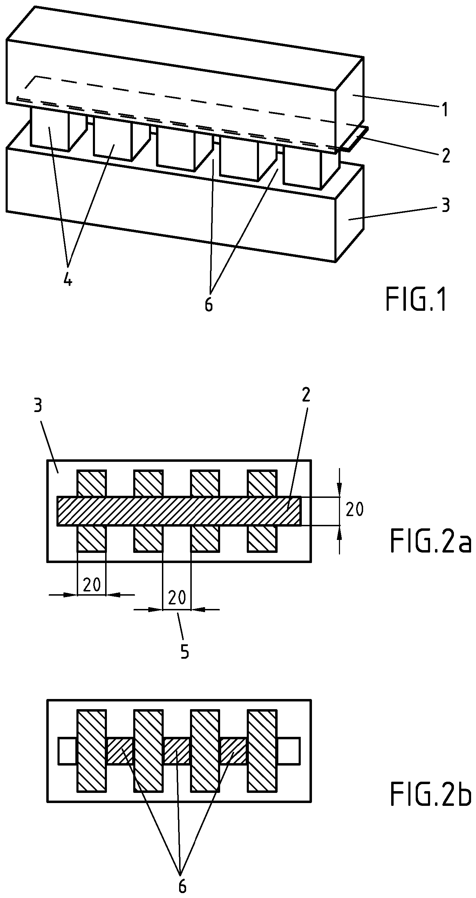

<u>Stufen-Benetzungstest mit biegesteifen Substraten/ Rigid Rigid Wet-out Test (Messmethode M3, Fig. 1, 2a (Ansicht von oben) und 2b (Ansicht von unten)):</u>

Die Musterpräparation erfolgte in einem Prüfklima von 23 °C +/- 1 °C Temperatur und 50 % +/- 5 % rel.

Luftfeuchte. Vor der Messung wurde eine Polycarbonatplatte (1, Fig. 1) gereinigt und konditioniert. Dazu wurde die Platte zunächst mit Isopropanol abgewischt und danach 5 Minuten an der Luft liegen gelassen, damit das Lösungsmittel abdampfen konnte. Das Prüfmuster (2, Fig. 1 und 2a) wurde auf eine Breite von 20 mm zugeschnitten, mittig auf die Polycarbonatplatte geklebt und mit einer Rolle fünfmal hin und her überrollt. Das Gewicht der Rolle war an die Breite des Prüfmusters angepasst, sodass das Prüfmuster mit 2 kg/cm angepresst wurde; bei einer Breite von 20 mm wurde also ein 4 kg-Roller verwendet. Es wurde darauf geachtet, dass dabei das Prüfmuster die Platte gut benetzte. Im Anschluss wurde das verklebte Muster 24 h bei einem Prüfklima von 23 °C +/- 1 °C Temperatur und 50 % +/- 5 % rel. Luftfeuchte gelagert, um eine Relaxation des Klebebandes vor der weiteren Verarbeitung zu gewährleisten.

Eine zusätzliche Polycarbonatplatte (3, Fig. 1 und 2a) wurde mit Stufen (4, Fig. 1) mit einer definierten Höhe in einem definierten Abstand (5, Fig. 2a) von 20 mm beklebt und anschließend gemäß der zuvor beschriebenen Methode gereinigt und konditioniert. Es wurden Stufen mit Höhen von 20 und 100 $\mu$m verwendet und als Referenz ein Muster ohne Stufe vermessen. Das mit den Stufen beklebte Substrat (3, untere Schicht) wurde mit den Stufen nach oben zeigend auf einen festen Untergrund gelegt und das mit dem Prüfmuster versehene Substrat (1) langsam und gleichmäßig möglichst druckfrei auf den Stufen platziert (rigid-rigid-Applikation), sodass das Klebeband nicht aktiv in die Hohlräume (6, Fig. 1 und 2b) zwischen den Stufen gepresst wurde. Anschließend wurden die zusammengefügten Platten einmal mit einer Rolle mit einem definierten Gewicht gleichmäßig überrollt. Die Anpressgeschwindigkeit der Rolle lag konstant bei etwa 2,4 m/min.

Zur Ermittlung der Initialbenetzung wurden keine Stufe (Stufenhöhe 0 cm) und eine 1 kg-Rolle verwendet. Für den Stufentest wurden eine Stufenhöhe von 100 $\mu$m und eine 4 kg Rolle verwendet. In beiden Fällen wurde jeweils eine Dreifachbestimmung durchgeführt. Beim Vergleich unterschiedlicher Klebebänder wurde darauf geachtet, dass sie die gleiche Dicke aufwiesen.

Für beide Tests wurde jeweils nach dem Anrollen ein Foto von allen Flächen zwischen den Stufen (4) mit einer hohen Auflösung und definierter Beleuchtung in einer Fotobox aufgenommen, um anschließend mittels einer Bildbearbeitungssoftware über eine Graustufenanalyse die benetzte Fläche zu quantifizieren. Dies erfolgte über eine Image-Analyse, genauer gesagt über einen Auto-Threshold, der die Otsu-Analyse nutzt. Der Anteil der benetzten Fläche in Abhängigkeit von der Zeit wird in [%] abgegeben. Aus der Differenz wird die Entnetzung ebenfalls in [%] berechnet.

Kommderziell_erhältliche, eingesetzte Chemikalien

| Chemische Verbindung | Handelsname | Hersteller | CAS-Nr. |
|---|---|---|---|
| Bis-(4-tert-butylcyclohexyl)peroxydicarbonat | Perkadox® 16 | Akzo Nobel | 15520-11-3 |
| 2,2'-Azobis(2-methylpropionitril), AIBN | Vazo® 64 | DuPont | 78-67-1 |
| Acrylsäure AS $_{(Tg = 106°C)}$ | - | Sigma-Aldrich | 79-10-7 |
| Butylacrylat BA $_{(iso\text{-}Index\ 0,\ Tg = -43°C)}$ | - | BASF | 141-32-2 |
| 2-Ethylhexylacrylat EHA$_{(iso\text{-}Index\ 1,\ Tg = -58°C)}$ | - | BASF | 103-11-7 |
| 2-Propylheptylacrylat PHA $_{(iso\text{-}Index\ 1,\ Tg = -69°C)}$ | - | BASF | 149021-58-9 |
| Isodecylacrylat IDA $_{(iso\text{-}Index\ 1,\ Tg = -60°C)}$ | - | Sartomer | 1330-61-6 |
| Heptadecanylacrylat iC17A $_{(Isomerengemisch,\ iso\text{-}Index\ 3,1;\ Tg = -72°C)}$ | - | BASF | - |
| Isobornylacrylat IBOA $_{(Tg = 94°C)}$ | Visiomer® IBOA | Evonik | 5888-33-5 |
| Pentaerythrittetraglycidether | D.E.R.™ 749 | DOW | 3126-63-4 |
| 3,4-Epoxycyclohexylmethyl-3,4-epoxycyclohexancarboxylat | Uvacure® 1500 | Cytec Industries Inc. | 2386-87-0 |
| Isophorondiamin | Vestamin® IPD | Evonik | 2855-13-2 |
| Tetraglycidyl-meta-xyloldiamin | Erisys™ GA-240 | CVC | 63738-22-7 |
| Resorcinol bis(diphenyl Phosphat) | Reofos® RDP | Chemtura | 57583-54-7 |
| Mikroballons (MB) $_{(trocken\text{-}unexpandierte\ Mikrosphären,\ Durchmesser\ 9 - 15\ \mu m,\ Expansions\text{-}Starttemperatur\ 106 - 111\ °C,\ TMA\text{-}Dichte\ \leq\ 25\ kg/m3)}$ | Expancel® 051 DU 40 | Expancel Nobel Industries | |

I. Herstellung der Haftklebmassen PA1 bis PA7

Im Folgenden wird die Präparation der Ausgangspolymere beschrieben. Die untersuchten Polymere werden konventionell über eine freie radikalische Polymerisation in Lösung hergestellt.

Polyacrylathaftkleber 1 (PA1):

Ein für radikalische Polymerisationen konventioneller 300 L-Reaktor wurde mit 11,0 kg Acrylsäure, 27,0 kg Butylacrylat (BA), 62,0 kg 2-Propylheptylacrylat (PHA) sowie 72,4 kg Aceton/ Isopropanol (94:6) befüllt. Nach 45minütiger Durchleitung von Stickstoffgas unter Rühren wurden der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann aus Lösung auf eine silikonisierte Trennfolie (50 $\mu$m Polyester) bzw. auf eine 23 $\mu$m dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50 g/m². Molmassen mittels GPC (Messmethode A3): $M_n$ = 25.000 g/mol; $M_w$ = 1.010.000 g/mol. K-Wert: 50,3.

Polyacrylathaftkleber 1 (PA2):

Ein für radikalische Polymerisationen konventioneller 300 L-Reaktor wurde mit 11,0 kg Acrylsäure, 27,0 kg BA, 62,0 kg Isodecylacrylat (IDA) sowie 72,4 kg Aceton/ Isopropanol (94:6) befüllt. Nach 45minütiger Durchleitung von Stickstoffgas unter Rühren wurden der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann analog PA 1 beschichtet und getrocknet. Der Masseauftrag betrug 50 g/m². Molmassen mittels GPC (Messmethode A3): $M_n$ = 31.400 g/mol; $M_w$ = 961.000 g/mol. K-Wert: 49,4.

Polyacrylathaftkleber 3 (PA3):

Ein für radikalische Polymerisationen konventioneller 100 L-Glasreaktor wurde mit 4,0 kg Acrylsäure, 12,0 kg BA, 24,0 kg PHA und 26,7 kg Aceton/ Benzin 60/95 (1:1) befüllt. Nach 45minütiger Durchleitung von Stickstoffgas unter Rühren wurden der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann analog PA 1 beschichtet und getrocknet. Der Masseauftrag betrug 50 g/m². Molmassen mittels GPC (Messmethode A3): $M_n$ = 24.500 g/mol; $M_w$ = 871.000 g/mol. K-Wert: 48,2.

Polyacrylathaftkleber 4 (PA4):

Ein für radikalische Polymerisationen konventioneller 100 L-Glasreaktor wurde mit 3,2 kg Acrylsäure, 8,0 kg BA, 28,8 kg IDA und 26,7 kg Aceton/ Isopropanol (94:6) befüllt. Nach 45minütiger Durchleitung von Stickstoffgas unter Rühren wurden der Reaktor auf 58 °C hochgeheizt und 30 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g Vazo® 67 hinzugegeben. Nach 4 und 8 h wurde mit jeweils 10,0 kg Aceton/ Isopropanol (94:6) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann analog PA 1 beschichtet und getrocknet. Der Masseauftrag betrug 50 g/m². Molmassen mittels GPC (Messmethode

A3): $M_n$ = 35.000 g/mol; $M_w$ = 1.020.000 g/mol. K-Wert: 52,9.

Vergleichsbeispiel Polyacrylathaftkleber 5 (PA5, Monomer EHA):

Ein für radikalische Polymerisationen konventioneller 100 L-Glasreaktor wurde mit 4,0 kg Acrylsäure, 12,0 kg BA, 24,0 kg EHA und 26,7 kg Aceton/ Benzin 60/95 (1:1) befüllt. Nach 45minütiger Durchleitung von Stickstoffgas unter Rühren wurden der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann analog PA 1 beschichtet und getrocknet. Der Masseauftrag betrug 50 g/m². Molmassen mittels GPC (Messmethode A3): $M_n$ = 26.800 g/mol; $M_w$ = 809.000 g/mol. K-Wert: 46,3.

Vergleichsbeispiel Polyacryrlathaftkleber 6 (PA6, Monomere PHA und IBOA (cyklisches Monomer)):

Ein für radikalische Polymerisationen konventioneller 100 L-Glasreaktor wurde mit 2,4 kg Acrylsäure, 12,0 kg Isobornylacrylat (IBOA), 25,6 kg PHA und 26,7 kg Aceton/ Benzin 60/95 (1:1) befüllt. Nach 45minütiger Durchleitung von Stickstoffgas unter Rühren wurden der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)-peroxydicarbonat hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann analog PA 1 beschichtet und getrocknet. Der Masseauftrag betrug 50 g/m². Molmassen mittels GPC (Messmethode A3): $M_n$ = 24.800 g/mol; $M_w$ = 980.000 g/mol. K-Wert: 50,1.

Vergleichsbeispiel_Polyacrylathaftkleber 7 (PA7, Monomer iC17A):

Ein für radikalische Polymerisationen konventioneller 100 L-Glasreaktor wurde mit 11,0 kg Acrylsäure, 27,0 kg BA, 62,0 kg Heptadecanylacrylat (iC17A) sowie 72,4 kg Aceton/ Isopropanol (94:6) befüllt. Nach 45minütiger Durchleitung von Stickstoffgas unter Rühren wurden der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer Uvacure® 1500 abgemischt, auf einen Feststoffgehalt von 30 % mit Aceton verdünnt und dann analog PA 1 beschichtet und getrocknet. Der Masseauftrag betrug 50 g/m². (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50 g/m². Molmassen mittels GPC (Messmethode A3): $M_n$ = 27.000 g/mol; $M_w$ = 990.000 g/mol. K-Wert: 50,1.

Zur Messung der klebtechnischen Eigenschaften der Haftklebmassen wurden zunächst die in den Beispielen angegebenen Massen PA1 - PA7 ohne den Polyacrylatschaumträger sowohl mit dem Vernetzer Uvacure® 1500 als auch in einem Vergleichsbeispiel mit einem Glycidyl-funktionalisierten Vernetzer (Erisys GA-240) getestet. Anhand der Ergebnisse in Tabelle 1 ist zu erkennen, dass es sich sowohl bei den Beispielen B1 - B5 der erfindungsgemäßen Haftklebmassen PA1 - PA4 als auch in den Vergleichsbeispielen VB6 - VB9 der Vergleichshaftklebmassen PA5 - PA7 um sehr kohäsive Massen mit einer moderaten Klebkraft auf Stahl handelt. Die Vernetzung der Haftklebemasse PA1 (Bsp. 5) mittels eines Glycidylamins zeigt ebenfalls gute Ergebnisse.

**Tabelle 1:** Beispiele B1 - B5 sowie Vergleichsbeispiele VB6 - VB10 - Klebtechnische Daten der Haftklebemassen

| Bsp. | PA | Vernetzer [Gew.-%] | Klebkraft Stahl [N/cm] | Klebkraft PE [N/cm] | SSZ, 10 N, 23°C [Min] | SSZ, 10 N, 70°C [Min] | MSW max [μm] | elast. Anteil [%] |
|------|-----|--------------------|------------------------|---------------------|------------------------|------------------------|---------------|--------------------|
| B1 | PA1 | Uvacure, 0,18 | 5,7 | 0,9 | > 10.000 | 1.180 | 532 | 92 |
| B2 | PA1 | Uvacure, 0,22 | 5,4 | 0,8 | > 10.000 | 2.500 | 420 | 93 |

(fortgesetzt)

| Bsp. | PA | Vernetzer [Gew.-%] | Klebkraft Stahl [N/cm] | Klebkraft PE [N/cm] | SSZ, 10 N, 23°C [Min] | SSZ, 10 N, 70°C [Min] | MSW max [μm] | elast. Anteil [%] |
|------|-----|-----------------|------|------|--------|--------|-----|-----|
| B3 | PA2 | Uvacure, 0,20 | 5,8 | 1,0 | > 10.000 | 2.200 | 470 | 95 |
| B4 | PA3 | Uvacure, 0,20 | 6,3 | 0,9 | > 10.000 | 2.510 | 416 | 97 |
| B5 | PA1 | Erisys, 0,075 | 5,1 | 0,8 | > 10.000 | 2.900 | 120 | 95 |
| B6 | PA4 | Uvacure, 0,20 | 6,3 | 0,8 | > 10.000 | 1.750 | 450 | 92 |
| VB7 | PA5 | Uvacure, 0,18 | 4,9 | 1,0 | > 10.000 | 440 | 297 | 97 |
| VB8 | PA5 | Uvacure, 0,22 | 5,2 | 0,8 | > 10.000 | 2.200 | 350 | 94 |
| VB9 | PA6 | Uvacure, 0,20 | 5,4 | 1,2 | > 10.000 | 3.100 | 420 | 89 |
| VB10 | PA7 | Uvacure, 0,20 | 2,8 | 1,5 | > 10.000 | 25 | 390 | 91 |
| Klebkraft Stahl und PE= Messmethode H1, SSZ = Scherstandszeiten 23° und 70°C = Messmethode H2, MSW = Mikroschertest = Messmethode H3, elast. Anteil = elastischer Anteil | | | | | | | | |

## II Herstellung der Ausgangspolymere für den Polyacrylatschaum VT sowie die Haftklebebandbeispiele MT1 bis MT10

Im Folgenden wird die Präparation des Ausgangspolymers beschrieben, welches konventionell über eine freie radikalische Polymerisation in Lösung hergestellt wurde.

Basispolymer P

Ein für radikalische Polymerisationen konventioneller Reaktor wurde mit 30 kg EHA, 67 kg BA, 3 kg Acrylsäure und 66 kg Aceton/Isopropanol (96:4) befüllt. Nach 45minütiger Durchleitung von Stickstoffgas unter Rühren wurden der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h wurden erneut 50 g Vazo® 67 zugegeben und nach 4 h wurde mit 20 kg Aceton/Isopropanol-Gemisch (96:4) verdünnt. Nach 5 sowie nach 7 h wurde jeweils mit 150 g Perkadox® 16 nachinitiiert und mit 23 kg Aceton/Isopropanol-Gemisch (96:4) verdünnt. Nach 22 h Reaktionszeit wurde die Polymerisation abgebrochen und auf Raumtemperatur abgekühlt. Das Polyacrylat hat einen K-Wert von 75,1, einen Feststoffgehalt von 50,2 % und mittlere Molekulargewichte von $M_n$ = 91.900 g/mol und $M_w$ = 1.480.000 g/mol.

Verfahren 1: Aufkonzentration / Herstellung der Schmelzhaftkleber:

Das Basispolymer P wird mittels Einschneckenextruder (Aufkonzentrationsextruder, Berstorff GmbH, Deutschland) weitestgehend vom Lösemittel befreit (Restlösemittelgehalt ≤ 0,3 Gew.-%). Die Parameter der Aufkonzentration des Basispolymers waren wie folgt: die Drehzahl der Schnecke betrug 150 U/min, der Motorstrom 15 A und es wurde ein Durchsatz von 58,0 kg/h flüssig realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts P lag bei ca. 115 °C. Der Feststoffgehalt betrug nach diesem Aufkonzentrationsschritt 99,8%.

Verfahren 2: Herstellung der erfindungsgemäßen Klebebänder, Abmischung mit dem Vernetzer-Beschleuniger-System für die thermische Vernetzung und Beschichtung

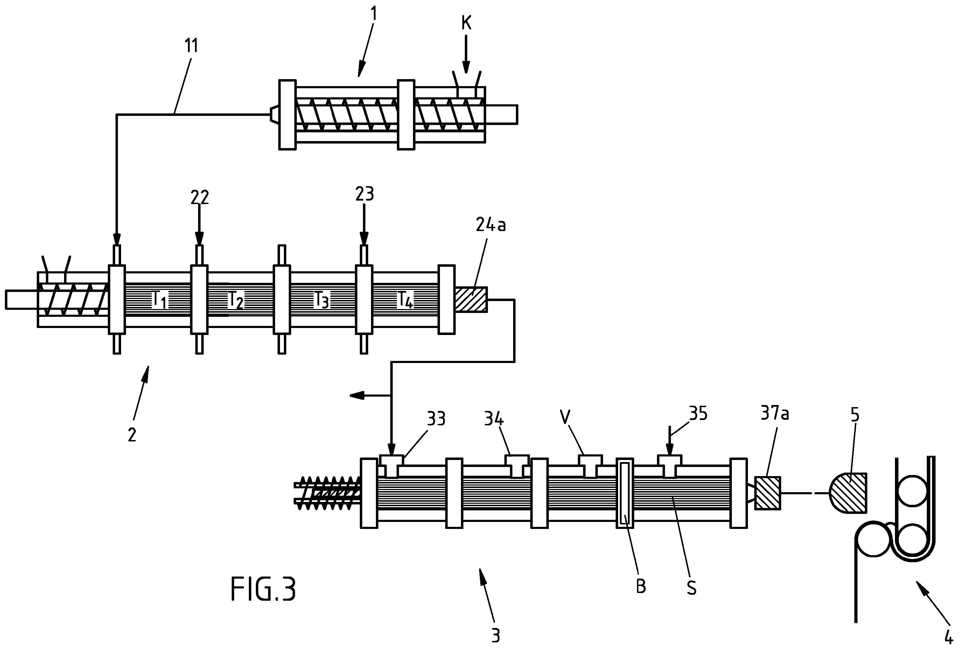

Die Schäumung fand in einer Versuchsanlage statt, die der Darstellung in Fig. 3 entspricht.
Das Basispolymer P wurde gemäß Verfahren 1 in einem Fütterextruder 1 aufgeschmolzen und als Polymerschmelze über einen beheizbaren Schlauch 11 in einen Planetwalzenextruder 2 (PWE) der Firma ENTEX (Bochum) gefördert (es wurde insbesondere ein PWE mit vier unabhängig voneinander heizbaren Modulen T1, T2, T3, T4 eingesetzt). Über die Dosieröffnung 22 bestand die Möglichkeit, zusätzliche Additive oder Füllstoffe, wie z.B. Farbpasten, zuzuführen. An Punkt 23 wurde der Vernetzer hinzugefügt. Alle Komponenten wurden zu einer homogenen Polymerschmelze gemischt.
Mittels einer Schmelzepumpe 24a und eines beheizbaren Schlauches 24b wurde die Polymerschmelze in einen Doppelschneckenextruder 3 (Firma BERSTORFF) überführt (Eingabeposition 33). An Position 34 wurde die Beschleunigerkomponente hinzugefügt. Anschließend wurde die gesamte Mischung in einem Vakuumdom V bei einem Druck von 175 mbar von allen Gaseinschlüssen befreit. Im Anschluss an die Vakuumzone befand sich auf der Schnecke ein Blister B, welcher einen Druckaufbau in dem darauf folgenden Segment S ermöglichte. Durch geeignete Steuerung der Extruderdrehzahl und der Schmelzepumpe 37a wurde in dem Segment S zwischen Blister B und Schmelzepumpe 37a ein Druck von größer 8 bar aufgebaut. An der Dosierstelle 35 wurde die Mikroballonmischung (Mikroballons eingebettet in das Dispergierhilfsmittel gemäß der Angaben bei den Versuchsreihen) hinzugefügt und mittels eines Mischelements homogen in die Vormischung eingearbeitet. Die entstandene Schmelzmischung wurde in eine Düse 5 überführt.

Nach Verlassen der Düse 5, also nach Druckabfall, expandierten die eingearbeiteten Mikroballons, wobei durch den Druckabfall eine scherungsarme Abkühlung der Polymermasse erfolgte. Es entstand ein geschäumtes Trägermaterial. Dieses wurde anschließend beidseitig mit den unten aufgeführten Haftklebmassen beschichtet, die jeweils auf einem Trennmaterial, das nach dem Entfernen wiederverwendet werden kann (Prozessliner), zugeführt wurden. Der so erhaltene Dreischichtverbund wurde mittels eines Walzenkalanders 4 zur Bahn ausgeformt.

Um die Verankerung der Haftklebmassen aus den Beispielen B 1 - 10 auf dem ausgeformten Polyacrylatschaum zu verbessern, wurden sowohl die Haftklebmassen als auch der Schaum mittels Corona vorbehandelt (Corona-Anlage der Firma VITAPHONE, Dänemark, 70 W·min/m$^2$). Diese Behandlung führte nach der Herstellung des Dreischichtverbundes zu einer verbesserten chemischen Anbindung an die Polyacrylatschaumträgerschicht.

Die Bahngeschwindigkeit beim Durchlaufen der Beschichtungsanlage betrug 30 m/min. Nach Verlassen des Walzenspaltes wurde ein Trennmaterial ausgedeckt und das fertige Dreischichtprodukt mit dem verbleibenden zweiten Trennmaterial aufgewickelt.

**Tabelle 2:** Polyacrylatschaum VT

| Beispiel | | | | VT |
|---|---|---|---|---|
| Komponenten | Basispolymer P<br>Expancel 051 DU 40<br>Polypox R16<br>IPDA<br>Reofos RDP | | [Gew.-%] | 97,8<br>1,5<br>0,139<br>0,144<br>0,41 |
| Aufbau | Dicke<br>Dichte | | [μm]<br>[kg/m$^3$] | 902<br>749 |
| Klebtechnische Eigenschaften | SSZ [min] | RT 20 N<br>70°C 10 N | [min] | 1874<br>1282 |
| | Klebkraft Stahl [N/cm] | sofort<br>3d<br>14d | [N/cm] | 24,5 A<br>33,4 A<br>35,1 A |
| Dichte: Messmethode A4, Klebkraft: Messmethode H2, SSZ (Scherstandszeit): Messmethode M2 | | | | |

Im Folgenden werden konkrete Beispiele B1 - B6 der erfindungsgemäßen Klebebänder umfassend den Polyacrylatschaumträger VT mit den erfindungsgemäßen Haftklebmassen mit einem beidseitigen Masseauftrag von 50 g/m$^2$ als auch Vergleichsbeispiele VB7 - VB10 umfassend den Polyacrylatschaumträger VT mit den nicht erfindungsgemäßen Haftklebmassen, ebenfalls mit einem beidseitigen Masseauftrag von 50 g/m$^2$, vorgestellt.

**Tabelle 3:** Klebkräfte auf Stahl und PE sowie Aufziehverhalten der dreischichtigen Haftklebebänder MT1 - MT10 umfassend den Polyacrylatschaumträger VT mit einer Gesamtdicke von 1000 μm

| Bsp. | PSA | Klebkraft Stahl sofort, [N/cm] | | Klebkraft Stahl 8h, [N/cm] | Klebkraft Stahl 1d, [N/cm] | Klebkraft Stahl 3d, [N/cm] | Klebkraft PE 3d, [N/cm] |
|---|---|---|---|---|---|---|---|
| | | offene Seite | abgedeckte Seite | offene Seite | offene Seite | offene Seite | offene Seite |
| MT1 | B1 | 11,1 | 12,0 | 44 f.s. | 44 f.s. | 45 f.s. | 10,1 |
| MT2 | B2 | 16,3 | 15,1 | 44 f.s. | 44 f.s. | 46 f.s. | 10,3 |
| MT3 | B3 | 11,5 | 10,1 | 45 f.s. | 45 f.s. | 44 f.s. | 12,6 |

(fortgesetzt)

| Bsp. | PSA | Klebkraft Stahl sofort, [N/cm] | | Klebkraft Stahl 8h, [N/cm] | Klebkraft Stahl 1d, [N/cm] | Klebkraft Stahl 3d, [N/cm] | Klebkraft PE 3d, [N/cm] |
|---|---|---|---|---|---|---|---|
| | | offene Seite | abgedeckte Seite | offene Seite | offene Seite | offene Seite | offene Seite |
| MT4 | B4 | 15,2 | 15,9 | 45 f.s. | 45 f.s. | 45 f.s. | 11,4 |
| MT5 | B5 | 12,0 | 12,1 | 44 f.s. | 45 f.s. | 46 f.s. | 10,9 |
| MT6 | B6 | 12,2 | 11,6 | 45 f.s. | 45 f.s. | 46 f.s. | 10,5 |
| MT7 | VB7 | 11,9 | 12,6 | 38,2 | 42,6 | 47 f.s. | 11,2 |
| MT8 | VB8 | 14,1 | 15,1 | 40,1 | 45 f.s. | 45 f.s. | 12,7 |
| MT9 | VB9 | 10,7 | 9,9 | 22,9 | 38,7 | 45 f.s. | 12,6 |
| MT10 | VB10 | 9,8 | 9,8 | 15,4 | 22,2 | 25,4 | 8,0 |
| PSA = Haftklebemasse, Klebkraft Stahl = Messmethode M1 (f.s. = foam split, Schaumspalten), Scherstandzeit = Messmethode M2 | | | | | | | |

Anhand der Klebkraftmessungen in Tabelle 3 ist zu erkennen, dass die erfindungsgemäßen Haftklebebänder MT1 - MT6 deutlich schneller auf Stahl aufziehen und ihre maximale Klebkraft erreichen bzw. es bei ihnen schneller zum Spalten des Polyacrylatschaumträgers kommt. Auffällig ist zum Beispiel die Haftklebmasse VB9 im Bespiel MT9, welche neben dem erfindungsgemäß verwendeten Monomer PHA statt eines linearen Monomers ein cyklisches Acrylat mit einem hohen Tg verwendet. Hier zeigt sich, dass das Polymer deutlich länger braucht, um auf das Substrat aufzuziehen. Des Weiteren ist die Haftklebmasse VB10 auffällig, deren Klebkraft auf Stahl in Kombination mit dem Polyacrylatschaumträger auch nach drei Tagen deutlich niedriger liegt. Bis auf das zuletzt genannte Beispiel weisen alle Haftklebbänder vergleichbare Klebkräfte auf PE auf. Weiterhin zeigt sich der Einfluss des Vernetzers im Beispiel MT5. Die Verwendung eines Glycidyl-funktionalisierten anstelle eines Epoxycyclohexyl-funktionalisierten Vernetzers führt zu einem langsameren Aufziehverhalten.

In Tabelle 4 werden die Klebkräfte auf den unterschiedlichen niederenergetischen Autolacken UreGloss, CeramiClear5 (CC5) und VW2K nach drei Tagen Aufziehzeit aufgelistet.

**Tabelle 4:** Klebkräfte auf niedrigenergetischen Lacken der dreischichtigen Haftklebebänder MT1 - MT10 umfassend den Polyacrylatschaumträger VT mit einer Gesamtdicke von 1000 $\mu$m

| Bsp. | PSA | Klebkraft UreGloss 3d, [N/cm] | Klebkraft CC5 3d, [N/cm] | Klebkraft VW2K 3d, [N/cm] |
|---|---|---|---|---|
| | | offene Seite | offene Seite | offene Seite |
| MT1 | B1 | 16,6 | 23,8 | 44 f.s. |
| MT2 | B2 | 16,9 | 24,7 | 46 f.s. |
| MT3 | B3 | 19,1 | 25,9 | 46 f.s. |
| MT4 | B4 | 16,7 | 24,0 | 45 f.s. |
| MT5 | B5 | 16,1 | 21,5 | 44 f.s. |
| MT6 | B6 | 19,2 | 24,3 | 45 f.s. |
| MT7 | VB7 | 14,3 | 22,8 | 38,5 |
| MT8 | VB8 | 14,6 | 25,1 | 34,2 |
| MT9 | VB9 | 12,2 | 21,5 | 31,7 |
| MT10 | VB10 | 10,1 | 12,5 | 20,4 |

Auch hier ist zu erkennen, dass die Haftklebebänder umfassend die erfindungsgemäßen Haftklebemassen im Vergleich bessere Ergebnisse erbringen.

**Tabelle 5:** Rigid Rigid Wet-out Test der dreischichtigen Haftklebebänder MT1 - MT10 umfassend den Polyacrylatschaumträger VT mit einer Gesamtdicke von 1000 $\mu$m

| Bsp. | Benetzung 0 $\mu$m, 1 kg, sofort, [%] | Benetzung 100 $\mu$m, 4 kg, sofort, [%] | Benetzung 100 $\mu$m, 4 kg, 1d, [%] | Benetzung 100 $\mu$m, 4 kg, 3d, [%] | Entnetzung 100 $\mu$m, 4 kg, Differenz 3d - sofort, [%] |
|---|---|---|---|---|---|
| | offene Seite | offene Seite | offene Seite | offene Seite | offene Seite |
| MT1 | 98 | 93 | 90 | 69 | -24 |
| MT2 | 96 | 90 | 85 | 73 | -17 |
| MT3 | 97 | 87 | 82 | 72 | -15 |
| MT4 | 98 | 90 | 86 | 68 | -22 |
| MT5 | 98 | 85 | 55 | 42 | -33 |
| MT6 | 97 | 85 | 79 | 69 | -16 |
| MT7 | 98 | 86 | 53 | 12 | -74 |
| MT8 | 97 | 88 | 49 | 9 | -77 |
| MT9 | 96 | 69 | 42 | 22 | -47 |
| MT10 | 98 | 82 | 12 | 6 | -76 |

Der Unterschied zwischen den erfindungsgemäßen Haftklebebändern und den Vergleichsbeispielen wird am besten im Rigid Rigid Wet-out Test deutlich. Während bei der Verklebung ohne Stufe die Benetzung in allen Beispielen sehr gut ist, zeigt sich, dass bei Verwendung einer Stufenhöhe von 100 $\mu$m die sofortige Benetzung nur bei Nutzung der erfindungsgemäßen Haftklebmassen MT1 - MT6 gut ist. Hier ist auch der Einfluss der Monomere, insbesondere des cyklischen Acrylats in Bsp. MT9 sowie des Vernetzers (MT5) gut zu erkennen. Des Weiteren zeigt sich, dass die Entnetzung, hier angegeben als Differenz zwischen der Benetzung nach drei Tagen und sofort (je kleiner die Differenz, desto geringer ist die Entnetzung), im Falle der erfindungsgemäßen Beispiele ebenfalls am geringsten ist.

**Patentansprüche**

1. Haftklebmasse, enthaltend zu mindestens 50 Gew.-%, bezogen auf das Gesamtgewicht der Haftklebmasse, mindestens ein Polymer A, das auf die folgende Monomerzusammensetzung zurückgeführt werden kann:

   a1) 55 bis 75 Gew.-% 2-Propylheptylacrylat (PHA) und/oder Isodecylacrylat;
   a2) 20 bis 40 Gew.-% mindestens eines (Meth)Acrylsäureesters, dessen Alkoholkomponente ein linearer $C_1$-$C_{18}$-Alkohol zugrundeliegt;
   a3) 5 bis 15 Gew.-% Acrylsäure,

   ausgenommen ein Polymer, das in folgenden Schritten erhalten wird:

   - Befüllen eines für radikalische Polymerisationen konventionellen 300 l-Reaktors mit 62,0 kg 2-Propylheptylacrylat, 27,0 kg Butylacrylat und 11,0 kg Acrylsäure sowie 72,4 kg Aceton/isopropanol (94:6);
   - 45minütiges Durchleiten von Stickstoffgas unter Rühren;
   - Hochheizen des Reaktors auf 58 °C;
   - Zugabe von 50 g 2,2'-Azobis(2-methylbutyronitril);
   - Erwärmen des äußeren Heizbades auf 75 °C und konstante Durchführung der Reaktion bei dieser Außentemperatur;
   - Zugabe von 50 g 2,2'-Azobis(2-methylbutyronitril) nach 1 h Reaktionszeit;
   - Verdünnen mit 20 kg Aceton/Isopropanol (94:6) nach 3 h und mit 10 kg Aceton/Isopropanol (94:6) nach 6 h;
   - Zugabe von jeweils 0,15 kg Bis-(4-tert-butylcyclohexyl)peroxydicarbonat nach 5,5 und nach 7 h zur Reduktion der Restinitiatoren;
   - Abbruch der Reaktion nach 24 h Reaktionszeit und Herunterkühlen auf Raumtemperatur.

2. Haftklebmasse gemäß Anspruch 1, **dadurch gekennzeichnet, dass** die Haftklebmasse durch mindestens ein Epoxycyclohexylderivat thermisch vernetzt ist.

3. Haftklebmasse gemäß mindestens einem der vorstehenden Ansprüche, **dadurch gekennzeichnet, dass** die Haftklebmasse kein Klebkraft steigerndes Harz enthält.

4. Haftklebmasse gemäß mindestens einem der vorstehenden Ansprüche, **dadurch gekennzeichnet, dass** das Polymer A ein gewichtsmittleres Molekulargewicht $M_w$ (Gelpermeationschromatographie, PMMA-Standards) von mindestens 500.000 g/mol aufweist.

5. Haftklebmasse gemäß mindestens einem der vorstehenden Ansprüche, **dadurch gekennzeichnet, dass** das Polymer A ein gewichtsmittleres Molekulargewicht $M_w$ (Gelpermeationschromatographie, PMMA-Standards) von maximal 1.700.000 g/mol aufweist.

6. Klebeband, umfassend einen geschäumten Träger und eine Haftklebmasse gemäß mindestens einem der vorstehenden Ansprüche.

7. Klebeband gemäß Anspruch 6, **dadurch gekennzeichnet, dass** der geschäumte Träger einen syntaktischen Polymerschaum aufweist.

8. Klebeband gemäß Anspruch 7, **dadurch gekennzeichnet, dass** der syntaktische Polymerschaum zu mindestens 50 Gew.-%, bezogen auf das Gesamtgewicht des Schaums, ein oder mehrere Poly(meth)acrylate enthält.

9. Klebeband gemäß mindestens einem der Ansprüche 6 bis 8, **dadurch gekennzeichnet, dass** die Haftklebmasse auf mindestens eine Seite des geschäumten Trägers kaschiert ist.

10. Klebeband gemäß mindestens einem der Ansprüche 6 bis 9, **dadurch gekennzeichnet, dass** der geschäumte Träger zu mindestens 50 Gew.-%, bezogen auf das Gesamtgewicht des Schaums, mindestens ein Poly(meth)acrylat B enthält, das auf die folgende Monomerzusammensetzung zurückgeführt werden kann:

   b1) 65 bis 97 Gew.-% Ethylhexylacrylat und/oder Butylacrylat,
   b2) 0 bis 30 Gew.-% Methylacrylat,
   b3) 3 bis 15 Gew.-% Acrylsäure.

11. Klebeband gemäß mindestens einem der Ansprüche 6 bis 10, **dadurch gekennzeichnet, dass** der geschäumte Träger thermisch vernetzt ist.

12. Klebeband gemäß mindestens einem der Ansprüche 6 bis 11, **dadurch gekennzeichnet, dass** auf beiden Seiten des geschäumten Trägers eine Haftklebmasse gemäß mindestens einem der Ansprüche 1 bis 6 angeordnet ist.

## Claims

1. Pressure-sensitive adhesive comprising at least 50 wt%, based on the total weight of the pressure-sensitive adhesive, of at least one polymer A which may be derived from the following monomer composition:

   a1) 55 to 75 wt% of 2-propylheptyl acrylate (PHA) and/or isodecyl acrylate;
   a2) 20 to 40 wt% of at least one (meth)acrylic acid ester for which the alcohol component is based on a linear $C_1$-$C_{18}$ alcohol;
   a3) 5 to 15 wt% of acrylic acid,

   except for a polymer obtained in the following steps:

   - charging a 300 l reactor conventional for radical polymerizations with 62.0 kg of 2-propylheptyl acrylate, 27.0 kg of butyl acrylate and 11.0 kg of acrylic acid and also 72.4 kg of acetone/isopropanol (94:6);
   - passing nitrogen gas through for 45 minutes with stirring;
   - heating the reactor to 58°C;
   - adding 50 g of 2,2'-azobis(2-methylbutyronitrile);
   - heating the external heating bath to 75°C and carrying out the reaction constantly at this external temperature;

- adding 50 g of 2,2'-azobis(2-methylbutyronitrile) after 1 h reaction time;
- diluting with 20 kg of acetone/isopropanol (94:6) after 3 h and with 10 kg of acetone/isopropanol (94:6) after 6 h;
- adding 0.15 kg of bis(4-tert-butylcyclohexyl) peroxydicarbonate after 5.5 and after 7 h respectively to reduce the residual initiators;
- discontinuing the reaction after 24 h reaction time and cooling down to room temperature.

2. Pressure-sensitive adhesive according to Claim 1, **characterized in that** the pressure-sensitive adhesive is thermally crosslinked by at least one epoxycyclohexyl derivative.

3. Pressure-sensitive adhesive according to at least one of the preceding claims, **characterized in that** the pressure-sensitive adhesive contains no peel adhesion-boosting resin.

4. Pressure-sensitive adhesive according to at least one of the preceding claims, **characterized in that** the polymer A has a weight-average molecular weight $M_w$ (gel permeation chromatography, PMMA standards) of at least 500 000 g/mol.

5. Pressure-sensitive adhesive according to at least one of the preceding claims, **characterized in that** the polymer A has a weight-average molecular weight $M_w$ (gel permeation chromatography, PMMA standards) of not more than 1 700 000 g/mol.

6. Adhesive tape comprising a foamed carrier and a pressure-sensitive adhesive according to at least one of the preceding claims.

7. Adhesive tape according to Claim 6, **characterized in that** the foamed carrier comprises a syntactic polymer foam.

8. Adhesive tape according to Claim 7, **characterized in that** the syntactic polymer foam contains at least 50 wt% , based on the total weight of the foam, of one or more poly(meth)acrylates.

9. Adhesive tape according to at least one of Claims 6 to 8, **characterized in that** the pressure-sensitive adhesive is laminated on at least one side of the foamed carrier.

10. Adhesive tape according to at least one of Claims 6 to 9, **characterized in that** the foamed carrier contains at least 50 wt%, based on the total weight of the foam, at least one poly(meth)acrylate B which may be derived from the following monomer composition:

   b1) 65 to 97 wt% of ethylhexyl acrylate and/or butyl acrylate,
   b2) 0 to 30 wt% of methyl acrylate,
   b3) 3 to 15 wt% of acrylic acid.

11. Adhesive tape according to at least one of Claims 6 to 10, **characterized in that** the foamed carrier is thermally crosslinked.

12. Adhesive tape according to at least one of Claims 6 to 11, **characterized in that** on both sides of the foamed carrier there is a pressure-sensitive adhesive according to at least one of Claims 1 to 6.

**Revendications**

1. Masse autoadhésive, contenant à raison d'au moins 50% en poids, par rapport au poids total de la masse autoadhésive, au moins un polymère A qui peut être attribué à la composition monomère suivante :

   a1) 55 à 75% en poids d'acrylate de 2-propylheptyle (PHA) et/ou d'acrylate d'isodécyle ;
   a2) 20 à 40% en poids d'au moins un ester de l'acide (méth)acrylique, dont le composant alcool est basé sur un alcool linéaire en $C_1$-$C_{18}$ ;
   a3) 5 à 15% en poids d'acide acrylique,

   à l'exception d'un polymère qui est obtenu dans les étapes suivantes :

- remplissage d'un réacteur de 300 l classique pour des polymérisations par voie radicalaire par 62,0 kg d'acrylate de 2-propylheptyle, 27,0 kg d'acrylate de butyle et 11,0 kg d'acide acrylique ainsi que par 72,4 kg d'acétone/isopropanol (94:6) ;
- passage pendant 45 minutes d'azote gazeux sous agitation ;
- montée en température du réacteur à 58°C ;
- ajout de 50 g de 2,2'-azobis(2-méthylbutyronitrile) ;
- chauffage du bain chauffant externe à 75°C et réalisation constante de la réaction à cette température externe ;
- ajout de 50 g de 2,2'-azobis(2-méthylbutyronitrile) après un temps de réaction de 1 h ;
- dilution par 20 kg d'acétone/isopropanol (94:6) après 3 h et par 10 kg d'acétone/isopropanol (94:6) après 6 h ;
- ajout d'à chaque fois 0,15 kg de peroxydicarbonate de bis-(4-tert-butylcyclohexyle) après 5,5 et après 7 h en vue de la réaction de l'initiateur résiduel ;
- interruption de la réaction après un temps de réaction de 24 h et refroidissement à température ambiante.

2. Masse autoadhésive selon la revendication 1, **caractérisée en ce que** la masse autoadhésive est réticulée thermiquement par au moins un dérivé d'époxycyclohexyle.

3. Masse autoadhésive selon au moins l'une des revendications précédentes, **caractérisée en ce que** la masse autoadhésive ne contient pas de résine augmentant l'adhésivité.

4. Masse autoadhésive selon au moins l'une des revendications précédentes, **caractérisée en ce que** le polymère A présente un poids moléculaire pondéral moyen $M_w$ (chromatographie par perméation de gel, étalon PMMA) d'au moins 500.000 g/mole.

5. Masse autoadhésive selon au moins l'une des revendications précédentes, **caractérisée en ce que** le polymère A présente un poids moléculaire pondéral moyen $M_w$ (chromatographie par perméation de gel, étalon PMMA) d'au maximum 1.700.000 g/mole.

6. Ruban adhésif, comprenant un support moussé et une masse autoadhésive selon au moins l'une des revendications précédentes.

7. Ruban adhésif selon la revendication 6, **caractérisé en ce que** le support moussé présente une mousse polymère syntactique.

8. Ruban adhésif selon la revendication 7, **caractérisé en ce que** la mousse polymère syntactique contient, à raison d'au moins 50% en poids, par rapport au poids total de la mousse, un ou plusieurs poly(méth)acrylates.

9. Ruban adhésif selon au moins l'une des revendications 6 à 8, **caractérisé en ce que** la masse autoadhésive est contrecollée sur au moins une face du support moussé.

10. Ruban adhésif selon au moins l'une des revendications 6 à 9, **caractérisé en ce que** le support moussé contient, à raison d'au moins 50% en poids, par rapport au poids total de la mousse, au moins un poly(méth)acrylate B, qui peut être attribué à la composition monomère suivante :

   b1) 65 à 97% en poids d'acrylate d'éthylhexyle et/ou d'acrylate de butyle,
   b2) 0 à 30% en poids d'acrylate de méthyle,
   b3) 3 à 15% en poids d'acide acrylique.

11. Ruban adhésif selon au moins l'une des revendications 6 à 10, **caractérisé en ce que** le support moussé est thermiquement réticulé.

12. Ruban adhésif selon au moins l'une des revendications 6 à 11, **caractérisé en ce qu'**une masse autoadhésive selon au moins l'une des revendications 1 à 6 est agencée sur les deux faces du support moussé.

FIG.1

FIG.2a

FIG.2b

FIG.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2305389 A2
- EP 2617789 A1
- WO 2013048985 A2
- WO 2013048945 A1
- WO 2014081623 A2
- US 20110244230 A1
- EP 2226372 A1
- DE 202010001353 U1
- EP 3178856 A1
- EP 05792143 A1
- EP 2414143 A1
- DE 102009015233 A1

### In der Beschreibung aufgeführte Nicht-Patentliteratur

- *CHEMICAL ABSTRACTS*, 2386-87-0
- *CHEMICAL ABSTRACTS*, 166412-78-8
- *CHEMICAL ABSTRACTS*, 18755-43-6